(19) Europäisches Patentamt
European Patent Office
Office européen des brevets

(11) EP 0 976 544 A1

(12) # EUROPEAN PATENT APPLICATION
published in accordance with Art. 158(3) EPC

(43) Date of publication:
**02.02.2000 Bulletin 2000/05**

(21) Application number: **98912797.2**

(22) Date of filing: **13.04.1998**

(51) Int. Cl.[7]: **B32B 27/30**, B05D 7/24, C09D 127/12, C08F 214/18

(86) International application number:
**PCT/JP98/01703**

(87) International publication number:
**WO 98/46426 (22.10.1998 Gazette 1998/42)**

(84) Designated Contracting States:
**DE FR GB IT**

(30) Priority: **15.04.1997 JP 9761497**

(71) Applicant:
**Daikin Industries, Ltd.**
**Osaka-shi Osaka 530-8323 (JP)**

(72) Inventors:
- **ARAKI, Takayuki,**
**Yodogawa-seisakusho**
**Settsu-shi, Osaka 566-8585 (JP)**
- **TANAKA, Yoshito,**
**Yodogawa-seisakusho**
**Settsu-shi, Osaka 566-8585 (JP)**
- **KUMEGAWA, Masahiro,**
**Yodogawa-seisakusho**
**Settsu-shi, Osaka 566-8585 (JP)**
- **OKA, Noritoshi,**
**Yodogawa-seisakusho**
**Settsu-shi, Osaka 566-8585 (JP)**
- **SANEMASA, Hisato,**
**Yodogawa-seisakusho**
**Settsu-shi, Osaka 566-8585 (JP)**
- **SHIMIZU, Tetsuo,**
**Yodogawa-seisakusho**
**Settsu-shi, Osaka 566-8585 (JP)**

(74) Representative: **HOFFMANN - EITLE**
**Patent- und Rechtsanwälte**
**Arabellastrasse 4**
**81925 München (DE)**

(54) **CHEMICAL-RESISTANT COMPOSITE MATERIAL**

(57) A composite material having chemical resistance which is produced by applying, to a substrate, a material comprising a fluorine-containing polymer having an excellent adhesive property to the substrate without necessitating complicated steps. The composite material having chemical resistance is produced by applying, to the substrate, the material comprising a fluorine-containing ethylenic polymer having functional group which is prepared by copolymerizing (a) 0.05 to 30 % by mole of at least one of fluorine-containing ethylenic monomers having at least one functional group selected from the group consisting of hydroxyl, carboxyl, a carboxylic salt group, a carboxylic ester group and epoxy, and (b) 70 to 99.95 % by mole of at least one of fluorine-containing ethylenic monomers having no functional group mentioned above.

EP 0 976 544 A1

## Description

TECHNICAL FIELD

The present invention relates to a composite material having chemical resistance which is produced by applying, to a substrate, a fluorine-containing polymer excellent in chemical resistance, non-sticking property, heat resistance, transparency, stain-proofing property, water- and oil-repelling property and particularly adhesive property to the substrate and utilizes particularly a characteristic of chemical resistance.

BACKGROUND ART

In the fields of chemical industries, various chemicals having high reactivity and corrosivity have to be stored and transported. Therefore it is necessary to use a material having particularly high chemical resistance for a tank and bottle for storing those chemicals, vessels such as carrier and basket for transporting wafers, piping materials such as pipes, valves and joints, tank and tower for manufacturing chemical products, etc.
Above all, in the field of manufacture of semi-conductors, where high accuracy is required and mixing of impurities must be avoided, a further reliable material having chemical resistance is demanded.
Various materials have been used as a material having chemical resistance, and among them, a fluorine-containing material, particularly a fluorine-containing resin is most popular for applications requiring high chemical resistance, and has been used practically. However the fluorine-containing resin solely is insufficient in strength, and in many cases, is used for coating and lining of metal substrates, etc. particularly in case of a large-sized equipment.
However the fluorine-containing resin involves a substantial problem, namely insufficient adhesion to a metal or glass substrate due to its excellent non-sticking property.
Therefore in case where the fluorine-containing polymer is used in the form of coating, there is a method of adhering a fluorine-containing resin to a substrate by roughening the surface of metal chemically or physically with expecting anchor effect between them. However this method requires much labor in the surface roughening itself, and though initial adhesion is possible, lowering of the anchor effect arises when a temperature change is made repeatedly and in case of use at high temperature.
Also a method for chemically activating a surface of a fluorine-containing resin by treating the surface with a solution prepared by dissolving metallic sodium in liquid ammonia has been proposed. However in that method, not only there is a fear that the solution itself causes environmental pollution but also there is a problem that its handling is attended with danger.
Further though a method for carrying out physical and chemical treatment such as plasma sputtering on a surface of a fluorine-containing resin has been proposed for activation of the resin surface, there is a problem that much labor is required for the treatment and an increase in cost is resulted.
Also in order to improve adhesion of a fluorine-containing resin coating, investigations with respect to addition of various components and formation of a primer layer have been made.
For example, there is a technique of adding an inorganic acid such as chromic acid to a coating composition containing a fluorine-containing polymer to form chemical conversion coating film on a surface of metal for enhancing adhesion of the composition (JP-B-63-2675). However since chromic acid contains hexahydric chromium, it cannot be said that such a technique is sufficient in view of safety in food and coating work. Further in case of use of other inorganic acids such as phosphoric acid, there was a problem that safety of a fluorine-containing resin coating composition is damaged.
Use of a coating composition containing a fluorine-containing resin as a primer, in which heat resistant resins such as polyamide imide, polyimide, polyethersulfone and polyether ether ketone and in addition, a metal powder are added instead of the above-mentioned inorganic acid, has been studied (JP-A-6-264000). Inherently there is almost no compatibility between a fluorine-containing resin and a heat resistant resin. Therefore there arises a phase separation in a coating film, thus easily causing intercoat adhesion failure between the primer and the top coat of the fluorine-containing resin. Further film defects such as pin holes and cracks arise easily at the time of processing at high temperature or during use due to a difference in heat shrinkage between the fluorine-containing polymer and the heat resistant resin or due to lowering of elongation of the coating film by the addition of the heat resistant resin, thus easily causing penetration of chemicals. Further when the heat resistant resin is blended, chemical resistance and non-sticking property which the fluorine-containing polymer possesses inherently are lowered.
Also for adhesion of a fluorine-containing resin coating composition to a glass, etc. requiring transparency, an improvement of the adhesion has been tried by treating the substrate with a silane coupling agent or adding a silicone resin to the fluorine-containing resin coating composition (JP-B-54-42366, JP-A-5-177768). However enhancement of adhesion is insufficient, heat resistance is lowered and separation of film, foaming and coloring arise easily at sintering or in use at high temperature.

On the contrary, fluorine-containing resin coating compositions prepared by copolymerizing a hydrocarbon monomer (containing no fluorine) containing functional group such as hydroxyl or carboxyl have been discussed. However since those coating compositions were originally studied mainly for a purpose of weather resistance, chemical resistance which is directed by the present invention is insufficient and it is difficult to use them for application requiring heat resistance (for example, 200 to 350°C).

Namely with respect to a polymer prepared by copolymerizing a hydrocarbon monomer (containing no fluorine) having functional group, thermal decomposition easily occurs on components of the monomer at the time of processing at high temperature or during use, and thus coating film failure, coloring, foaming, separation, etc. arise, which lowers chemical resistance and makes it impossible to attain purposes of coating a fluorine-containing resin.

Further fluorine-containing polymers are generally insufficient in mechanical strength and dimensional stability, and high in price. In order to minimize those disadvantages and make the best use of the above-mentioned merits which the fluorine-containing polymer possesses inherently and, investigations have been made also with respect to its use in the form of film.

However the fluorine-containing polymer inherently has low adhesive force, and it is difficult to adhere the fluorine-containing polymer directly to other material (substrate). For example, even if the adhering is tried by thermoprocessing, adhesive strength of the fluorine-containing polymer is not enough, or even if the polymer has adhesive force to a certain extent, such an adhesive force is apt to vary depending on kind of the substrate. Thus in many cases, reliability on the adhesive strength of the fluorine-containing polymer has been not so enough.

In order to adhere the fluorine-containing polymer film to a substrate, mainly the following methods have been studied:

1. a method for physically roughening a surface of substrate by sand blasting, etc.,
2. a method for surface-treating a fluorine-containing resin film by chemical treatment such as sodium etching, plasma treatment, photochemical treatment, etc.,
3. a method for adhering by using an adhesive, and other methods. With respect to the methods 1 and 2 above, surface-treating steps are required, and the steps are complicated and productivity is poor. Also kinds and shapes of substrates are restricted. Further the obtained adhesive force is insufficient, and chemical resistance which the fluorine-containing resin inherently possesses is easily lowered. Also the method of using a chemical such as sodium etching has a problem with safety.

Use of an adhesive in the method 3 above has also been discussed. A usual hydrocarbon type (non-fluorine-containing) adhesive does not have enough adhesive property and its heat resistance is insufficient. Thus a hydrocarbon type adhesive cannot stand under conditions for adhering of a fluorine-containing polymer film which requires molding and processing at high temperature, and peeling due to decomposition of the adhesive and coloring occur. Since the above-mentioned composite material produced by using an adhesive also is insufficient in chemical resistance, heat resistance and water resistance, it cannot maintain adhesive force due to a change in temperature and environment, and lacks in reliability.

On the contrary, adhesion by using an adhesive composition comprising a fluorine-containing polymer having functional group is discussed.

For example, it is reported that a fluorine-containing polymer prepared by graft-polymerizing, to the fluorine-containing polymer, a hydrocarbon monomer which has carboxyl represented by maleic anhydride and vinyltrimethoxysilane, a residual group of carbonic acid, epoxy or a hydrolyzable silyl group, is used as an adhesive (for example, JP-A-7-18035, JP-A-7-25952, JP-A-7-25954, JP-A-7-173230, JP-A-7-173446, JP-A-7-173447) and that an adhesive composition comprising a fluorine-containing copolymer prepared by copolymerizing a hydrocarbon monomer having functional group such as hydroxyalkyl vinyl ether with tetrafluoroethylene or chlorotrifluoroethylene and an isocyanate hardening agent is cured and used as an adhesive between vinyl chloride resin and corona-discharged ETFE (for example, JP-A-7-228848).

The above-mentioned adhesive composition comprising a fluorine-containing resin prepared by graft-polymerizing or copolymerizing a hydrocarbon monomer having functional group does not have enough heat resistance, and thus at the time of processing a composite material comprising the adhesive composition and a fluorine-containing resin film at high temperature or during use at high temperature, decomposition and foaming occur, thereby causing reduction of adhesive strength, peeling and coloring. In case of the adhesive composition disclosed in JP-A-7-228848, it is necessary to corona-discharge the fluorine-containing resin film.

As mentioned above, there have been no material for composite material having chemical resistance which assures strong adhesion to a substrate.

In view of the above-mentioned facts, an object of the present invention is to provide a composite material having chemical resistance which is produced by applying, to a substrate, a material comprising a fluorine-containing polymer being excellent in adhesion to the substrate without necessitating complicated steps.

Further the composite material having chemical resistance of the present invention is excellent in non-sticking property, stain-proofing property, water- and oil-repelling property, stain removing property, rust preventing property, transparency (property for exhibiting clear surface pattern), resistance to energy ray and antibacterial property.

DISCLOSURE OF THE INVENTION

The present invention relates to a composite material having chemical resistance which is produced by applying, to a substrate, a material comprising a fluorine-containing ethylenic polymer having functional group and prepared by copolymerizing: (a) 0.05 to 30 % by mole of at least one of fluorine-containing ethylenic monomers having at least one functional group selected from the group consisting of hydroxyl, carboxyl, a carboxylic salt group, a carboxylic ester group and epoxy and (b) 70 to 99.95 % by mole of at least one of fluorine-containing ethylenic monomers having no functional group mentioned above.

In that case, it is preferable that the above-mentioned fluorine-containing ethylenic monomer (a) having functional group is at least one of fluorine-containing ethylenic monomers represented by the formula (1):

$$CX_2=CX^1-R_f-Y \qquad (1)$$

wherein Y is $-CH_2OH$, -COOH, a carboxylic salt group, a carboxylic ester group or epoxy, X and $X^1$ are the same or different and each is hydrogen atom or fluorine atom, $R_f$ is a divalent fluorine-containing alkylene group having 1 to 40 carbon atoms, a fluorine-containing oxyalkylene group having 1 to 40 carbon atoms, a fluorine-containing alkylene group having ether bond and 1 to 40 carbon atoms or a fluorine-containing oxyalkylene group having ether bond and 1 to 40 carbon atoms.

Further it is preferable that the fluorine-containing ethylenic monomer (b) having no functional group mentioned above is tetrafluoroethylene.

Further it is preferable that the fluorine-containing ethylenic monomer (b) having no functional group mentioned above is a monomer mixture of 85 to 99.7 % by mole of tetrafluoroethylene and 0.3 to 15 % by mole of a monomer represented by the formula (2):

$$CF_2=CF-R_f^1 \qquad (2)$$

wherein $R_f^1$ is $CF_3$ or $OR_f^2$, in which $R_f^2$ is a perfluoroalkyl group having 1 to 5 carbon atoms.

Further it is preferable that the fluorine-containing ethylenic monomer (b) having no functional group mentioned above is a monomer mixture comprising 40 to 80 % by mole of tetrafluoroethylene, 20 to 60 % by mole of ethylene and 0 to 15 % by mole of other monomer copolymerizable with those monomers.

In the present invention, it is preferable that the fluorine-containing ethylenic polymer having functional group is applied to a substrate in the form of a coating, aqueous dispersion, powder coating or film.

Further the substrate may be a metal, ceramic such as glass and synthetic resin.

The composite material having chemical resistance of the present invention can be suitably used for vessels such as tank and bottle for storing chemicals or piping materials such as pipe and joint for transporting chemicals.

BRIEF DESCRIPTION OF THE DRAWINGS

Fig. 1 is a diagrammatic plan view of an adhered sample made to measure adhesive strength in Example 7 of the present invention.

Fig. 2 is a diagrammatic perspective view of a test sample used to measure adhesive strength in Example 7 of the present invention.

Fig. 3 is a diagrammatic perspective view of a laminated article made to produce a test piece to be subjected to adhesion test (T-type peeling test) in the present invention.

Fig. 4 is a diagrammatic perspective view of a test piece to be subjected to adhesion test (T-type peeling test) in the present invention.

Fig. 5 is a diagrammatic perspective view of a test piece to be subjected to adhesion test (tensile shear strength test) in the present invention.

Fig. 6 is a diagrammatic view of a test device to be used for adhesion test (tensile shear strength test) in the present invention.

Fig. 7 is a diagrammatic cross-sectional view of a laminated test plate made in Example 15 of the present invention.

Fig. 8 is a diagrammatic cross-sectional view of a three-layered laminated article made in Example 15 of the

present invention.

Fig. 9 is a diagrammatic cross-sectional view of a laminated article made in Comparative Example 10 of the present invention.

Fig. 10 is a diagrammatic cross-sectional view of a laminated test plate for making a laminated article in Example 16 of the present invention.

Fig. 11 is a diagrammatic cross-sectional view of a laminated article made in Example 16 of the present invention.

Fig. 12 is a diagrammatic cross-sectional view of a laminated article to be subjected to T-type peeling test in Example 16 of the present invention.

Fig. 13 is a diagrammatic cross-sectional view of a laminated article to be subjected to T-type peeling test in Comparative Example 10 of the present invention.

Fig. 14 is a diagrammatic cross-sectional view of a laminated test plate made in Comparative Example 12 of the present invention.

Fig. 15 is a diagrammatic cross-sectional view of a vessel to be used for hydrochloric acid permeation test of a hydroxyl-containing PFA film in Example 20 of the present invention.

Fig. 16 is a permeation curve showing a relation between permeation time and permeated amount which was obtained in hydrochloric acid permeation test of a hydroxyl-containing PFA film in Example 20 of the present invention.

BEST MODE FOR CARRYING OUT THE INVENTION

The composite material having chemical resistance of the present invention is one produced by applying, to a substrate, a material comprising a fluorine-containing ethylenic polymer having functional group and prepared by copolymerizing:

(a) 0.05 to 30 % by mole of at least one of fluorine-containing ethylenic monomers having at least one functional group selected from the group consisting of hydroxyl, carboxyl, a carboxylic salt group, a carboxylic ester group and epoxy and

(b) 70 to 99.95 % by mole of at least one of fluorine-containing ethylenic monomers having no functional group mentioned above.

The above-mentioned material comprising a fluorine-containing ethylenic polymer having functional group has surprisingly strong adhesion in the form of coating or film to metal, glass and other substrates even without use of an adhesive, surface-treatment on the substrate, formation of a primer layer and addition of a component having adhesive property in the material.

With respect to the fluorine-containing ethylenic polymer having functional group which is used for preparing the composite material of the present invention, it is important to copolymerize (a) the above-mentioned fluorine-containing ethylenic monomer having functional group and (b) the fluorine-containing ethylenic monomers having no functional group mentioned above to introduce the functional group into the fluorine-containing polymer, thereby making it possible to give excellent adhesive force directly to surfaces of various substrates, to which adhesion has been difficult or impossible. Namely as compared with a fluorine-containing polymer prepared by copolymerizing a non-fluorine-containing monomer having functional group, the fluorine-containing polymer of the present invention is excellent in heat resistance, and decomposition at processing at high temperature (for example, 200° to 400°C) can be inhibited more and a large adhesive strength can be obtained. Further a coating layer being free from coloring, foaming, pin hole caused thereby and leveling failure can be formed on a substrate. Also in case where the composite material is used at high temperature, adhesive property is maintained and a coating layer failure such as coloring, whitening, foaming or pin hole is difficult to arise, and permeation of a chemical to a substrate can be inhibited.

The above-mentioned fluorine-containing polymer having functional group has excellent characteristics such as not only heat resistance thereof but also chemical resistance, non-sticking property, stain-proofing property, friction resistance and weather resistance of a fluorine-containing polymer and can give such excellent characteristics to a coating film without lowering them. Further it has been found that by introducing a functional group into a fluorine-containing polymer, impermeability of a chemical is enhanced (permeation is lowered) as compared with a fluorine-containing polymer having no functional group.

Then the fluorine-containing ethylenic copolymer having functional group which is a material for the composite material of the present invention is explained below.

The functional group of the fluorine-containing ethylenic polymer having functional group is at least one functional group selected from the group consisting of hydroxyl, carboxyl, a carboxylic salt group, a carboxylic ester group and epoxy, and provides the polymer with adhesion to various substrates by its effect. Kinds and combination of the functional groups are optionally selected depending on kind of a surface of the substrate and purpose and application.

From the viewpoint of heat resistance, hydroxyl is most preferable.

Examples of the preferred fluorine-containing ethylenic monomer (a) having functional group which is one of components constituting the fluorine-containing ethylenic polymer having functional group are fluorine-containing ethylenic monomers having functional group which are represented by the formula (1):

$$CX_2=CX^1-R_f-Y \qquad (1)$$

wherein Y is $-CH_2OH$, -COOH, a carboxylic salt group, a carboxylic ester group or epoxy, X and $X^1$ are the same or different and each is hydrogen atom or fluorine atom, $R_f$ is a divalent alkylene group having 1 to 40 carbon atoms, a fluorine-containing oxyalkylene group having 1 to 40 carbon atoms, a fluorine-containing alkylene group having ether bond and 1 to 40 carbon atoms or a fluorine-containing oxyalkylene group having ether bond and 1 to 40 carbon atoms.

Examples of the fluorine-containing ethylenic monomer (a) having functional group are one represented by the formula (3):

$$CF_2=CF-R_f^3-Y \qquad (3)$$

wherein Y is as defined in the above formula (1), $R_f^3$ is a divalent fluorine-containing alkylene group having 1 to 40 carbon atoms or $OR_f^4$, in which $R_f^4$ is a divalent fluorine-containing alkylene group having 1 to 40 carbon atoms or a divalent fluorine-containing alkylene group having ether bond and 1 to 40 carbon atoms, one represented by the formula (4):

$$CF_2=CFCF_2-OR_f^5-Y \qquad (4)$$

wherein Y is as defined in the above formula (1), $R_f^5$ is a divalent fluorine-containing alkylene group having 1 to 39 carbon atoms or a divalent fluorine-containing alkylene group having ether bond and 1 to 39 carbon atoms, one represented by the formula (5):

$$CH_2=CFCF_2-R_f^6-Y \qquad (5)$$

wherein Y is as defined in the above formula (1), $R_f^6$ is a divalent fluorine-containing alkylene group having 1 to 39 carbon atoms or $OR_f^7$, in which $R_f^7$ is divalent fluorine-containing alkylene group having 1 to 39 carbon atoms or a divalent fluorine-containing alkylene group having ether bond and 1 to 39 carbon atoms, one represented by the formula (6):

$$CH_2=CH-R_f^8-Y \qquad (6)$$

wherein Y is as defined in the above formula (1), $R_f^8$ is a divalent fluorine-containing alkylene group having 1 to 40 carbon atoms, or the like monomer.

From the viewpoint that copolymerizability with the fluorine-containing ethylenic monomer (b) having no functional group mentioned above is comparatively good and that heat resistance of the obtained polymer is not lowered remarkably, the fluorine-containing ethylenic monomers having functional group and represented by the formulae (3) to (6) are preferable.

Among them, from the viewpoint of good copolymerizability with the fluorine-containing ethylenic monomer (b) having no functional group mentioned above and heat resistance of the obtained polymer, the compounds of the formulae (3) and (5) are preferable, and the compound of the formula (5) is particularly preferable.

Examples of the fluorine-containing ethylenic monomer having functional group and represented by the formula (3) are:

$CF_2=CFOCF_2CF_2CH_2OH$, $CF_2=CFO(CF_2)_3COOH$,

$CF_2=CFOCF_2CF_2COOCH_3$,

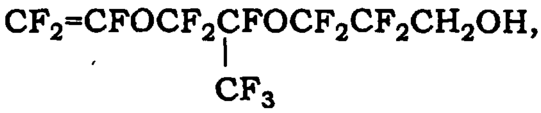

$CF_2=CFCF_2COOH$, $CF_2=CFCF_2CH_2OH$,

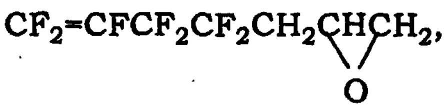

and the like.

Examples of the fluorine-containing ethylenic monomer having functional group and represented by the formula (4) are:

$CF_2=CFCF_2OCF_2CF_2CF_2COOH$,

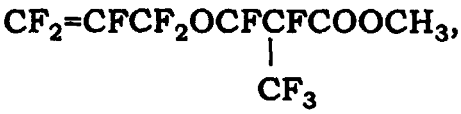

and the like.

Examples of the fluorine-containing ethylenic monomer having functional group and represented by the formula (5) are:

$CH_2=CFCF_2CF_2CH_2CH_2OH$, $CH_2=CFCF_2CF_2COOH$,

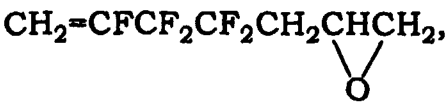 $CH_2=CF(CF_2CF_2)_2COOH$,

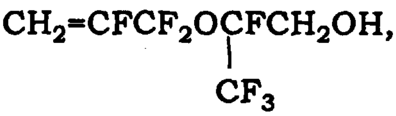 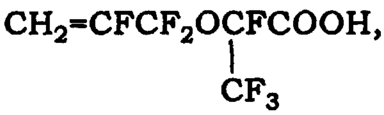

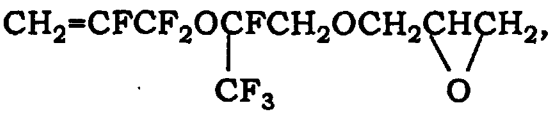

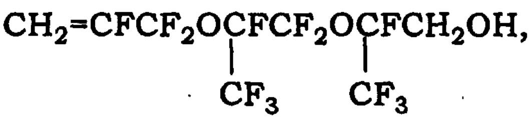

and the like.

Examples of the fluorine-containing ethylenic monomer having functional group and represented by the formula (6) are:

$$CH_2=CHCF_2CF_2CH_2CH_2COOH,$$

$$CH_2=CH-(CF_2)_4-CH_2CH_2CH_2OH,$$

$$CH_2=CH-(CF_2)_6-CH_2CH_2COOCH_3,$$

and the like.

In addition, there are

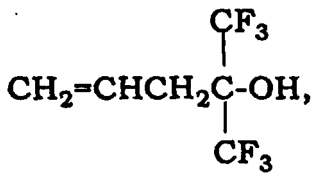

and the like.

The fluorine-containing ethylenic monomer (a) having functional group is copolymerized with the fluorine-containing ethylenic monomer (b) having no specific functional group which the monomer (a) has. The fluorine-containing ethylenic monomer (b) is preferably selected from monomers having no functional group. The monomer (b) can be optionally selected from known monomers, and gives in addition to excellent chemical resistance, heat resistance, non-sticking property, stain-proofing property and friction resistance to the polymer.

Examples of the fluorine-containing ethylenic monomer (b) are tetrafluoroethylene, a monomer represented by the formula (2): $CF_2=CF-R_f^1$, wherein $R_f^1$ is $CF_3$ or $OR_f^2$, in which $R_f^2$ is perfluoroalkyl group having 1 to 5 carbon atoms, chlorotrifluoroethylene, vinylidene fluoride, vinyl fluoride, hexafluoroisobutene,

$$CH_2=CF-(CF_2)_n-X^2,\ CH_2=CH-(CF_2)_n-X^2,$$

wherein $X^2$ are selected from hydrogen atom, chlorine atom and fluorine atom, n is an integer of 1 to 5, and the like.

In addition to the fluorine-containing ethylenic monomer (a) having functional group and the fluorine-containing ethylenic monomer (b) having no functional group mentioned above, an ethylenic monomer having no fluorine atom may be copolymerized in the range of not lowering heat resistance and chemical resistance. In that case, it is preferable that the ethylenic monomer having no fluorine atom is selected from ethylenic monomers having not more than 5 carbon atoms in order not to lower heat resistance. Examples of such an ethylenic monomer are ethylene, propylene, 1-butene, 2-butene, and the like.

A content of the fluorine-containing ethylenic monomer (a) having functional group in the fluorine-containing ethylenic polymer having functional group which is used in the present invention is from 0.05 to 30 % by mole on the basis of the total amount of monomers in the polymer. Further the content is optionally selected depending on kind of a surface of a substrate requiring chemical resistance, shape of the substrate, coating method, film forming method and conditions and further depending on purposes and applications of equipment to which the composite material is applied. The content of the fluorine-containing ethylenic monomer (a) having functional group is preferably from 0.05 to 20 % by mole, particularly preferably from 0.1 to 10 % by mole.

When the content of the fluorine-containing ethylenic monomer (a) having functional group is less than 0.05 % by mole, sufficient adhesion to the substrate surface is difficult to obtain, and separation easily occurs due to temperature change and permeation of chemicals. When more than 30 % by mole, heat resistance and chemical resistance are lowered and there occur adhesion failure, coloring, foaming and pin hole at sintering at high temperature or during use at high temperature, thus easily causing separation of a coating layer and elution due to decomposition.

Examples of the preferred fluorine-containing ethylenic polymer having functional group used in the present invention are as follows.

(I) A polymer comprising 0.05 to 30 % by mole of the fluorine-containing ethylenic monomer (a) having functional group and 70 to 99.95 % by mole of tetrafluoroethylene (reactive PTFE).

The polymer is the most excellent in heat resistance and non-sticking property in addition to chemical resistance, and further is superior from the viewpoint of sliding properties (friction resistance, abrasion resistance).

(II) A polymer comprising 0.05 to 30 % by mole of the fluorine-containing ethylenic monomer (a) having functional group based on the total amount of monomers, and further based on the total amount of monomers excluding the monomer (a), 85 to 99.7 % by mole of tetrafluoroethylene and 0.3 to 15 % by mole of the monomer represented by the formula (2):

$$CF_2=CF-R_f^1 \qquad (2)$$

wherein $R_f^1$ is $CF_3$ or $OR_f^2$, in which $R_f^2$ is a perfluoroalkyl group having 1 to 5 carbon atoms. For example, there is a tetrafluoroethylene-perfluoro(alkyl vinyl ether) copolymer having functional group (reactive PFA) or a tetrafluoroethylene-hexafluoropropylene polymer having functional group (reactive FEP).

The polymer has heat resistance, chemical resistance and non-sticking property nearly equivalent to those of the above-mentioned reactive PTFE (I), and further is superior from the points of possessing transparency and being melt-processable and from the viewpoint that even when coated in the form of coating, it is possible to make the coating film transparent and its surface smooth by heating.

(III) A polymer comprising 0.05 to 30 % by mole of the fluorine-containing ethylenic monomer (a) having functional group based on the total amount of monomers, and further based on the total amount of monomers excluding the monomer (a), 40 to 80 % by mole of tetrafluoroethylene, 20 to 60 % by mole of ethylene and 0 to 15 % by mole of other copolymerizable monomer (ethylene-tetrafluoroethylene polymer having functional group (reactive ETFE)).

The polymer is superior from the viewpoint of excellent heat resistance, stain-proofing property, weather resistance and transparency in addition to excellent chemical resistance, and further excellent mechanical strength, hardness and rigidity and from the point that molding and combining with other substrate (lamination, etc.) are easy because of good melt-flowability.

The above-mentioned fluorine-containing ethylenic polymers having functional group can be prepared by copolymerizing the fluorine-containing ethylenic monomer (a) having functional group and the fluorine-containing ethylenic monomer (b) having no functional group through known polymerization methods. Among them, radical copolymerization method is mainly used. Namely means for initiating the polymerization is not particularly limited if the polymerization advances radically. For example, the polymerization is initiated by an organic or inorganic radical polymerization initiator, heat, light, ionizing radiation, etc. The polymerization can be carried out by solution polymerization, bulk polymerization, suspension polymerization, emulsion polymerization, or the like. A molecular weight of the polymer is regulated by a concentration of the monomers used in the polymerization, a concentration of the initiator, a concentration of a chain transfer agent and polymerization temperature. Amounts of components of the prepared copolymer can be regulated by amounts of monomers used.

The fluorine-containing ethylenic polymer having functional group and explained above can be made into various forms as a material to be applied to a substrate. Represented examples of its application are a coating material or a material in the form of film. The polymer may be formed into a molded article.

In the present invention, the above-mentioned fluorine-containing ethylenic polymer having functional group can be applied to a substrate in the form of coating to give a composite material having chemical resistance.

In the present invention, in case of use in the form of coating, the polymer is capable of being in the form of aqueous dispersion, organic solvent dispersion, powder (including granulate), organosol or an aqueous emulsion of organosol. Among them, from environmental and safety points of view, it is preferable to apply in the form of an aqueous dispersion or powder (powder coating).

The coating may be applied so that excellent adhesive property of the fluorine-containing ethylenic polymer having functional group to the substrate is exhibited. The coating may be applied in one layer or as a primer.

In the present invention, the aqueous dispersion for fluorine-containing coating composition is prepared by dispersing, in water, particles of the above-mentioned fluorine-containing ethylenic polymer having functional group. By introducing a functional group in the fluorine-containing polymer, dispersion stability of fine particles in the aqueous dispersion is enhanced and a coating composition having good storage stability can be obtained, and further leveling property and transparency of a coating film are enhanced.

As the fluorine-containing ethylenic polymer having functional group, from the viewpoint of non-sticking property, heat resistance and friction resistance in addition to chemical resistance, the reactive PTFE (I) is preferred, and from the viewpoint of heat resistance and transparency, the reactive PFA or reactive FEP (II) is preferred.

The above-mentioned aqueous dispersion is preferably in a state of 0.01 to 1.0 μm fine particles of the polymer being dispersed in water. A surfactant may be blended in the aqueous dispersion for the purpose of dispersion stability. Also to the aqueous dispersion can be added additives to be used usually such as pigment, surfactant, defoaming agent, viscosity control agent and leveling agent in amounts not lowering remarkably chemical resistance, heat resistance and friction resistance.

The aqueous dispersion for fluorine-containing coating composition can be prepared through various methods. Examples of the method are, for instance,

- a method wherein a powder of the fluorine-containing polymer having functional group and prepared by suspension polymerization is finely pulverized and then the pulverized powder is dispersed homogeneously into an aqueous dispersion medium with a surfactant,
- a method wherein a fluorine-containing aqueous dispersion is prepared at the same time as emulsion polymerization and further a surfactant and additives are added as case demands,

and the like methods. From the viewpoint of productivity and quality (for making particle size smaller and more uniform), a method of preparing an aqueous dispersion directly by emulsion polymerization is preferred.

A concentration of the polymer in the aqueous dispersion varies depending on intended coating thickness, concentration and viscosity of a coating composition, coating method, etc., and is usually selected in the range of from about 5 % by weight to about 70 % by weight.

The coating method is not particularly limited. The coating may be carried out by brush coating, spray coating, roll coating or the like, followed by drying and then sintering at a temperature of not less than the melting point of the polymer and not more than its decomposition temperature depending on kind of the polymer.

The coating thickness may be selected depending on application, purpose, substrate, etc. For example, the coating thickness is from about 5 μm to about 200 μm, preferably from 10 to 100 μm.

The powder coating composition of the present invention comprises a powder of the above-mentioned fluorine-containing ethylenic polymer having functional group.

Further from the viewpoint of heat resistance, corrosion resistance and non-sticking property in addition to chemical resistance, the reactive PFA or reactive FEP (II) is preferred, and from the viewpoint of stain-proofing property, processability and transparency, the reactive ETFE (III) is preferred.

As the fluorine-containing powder coating composition, there can be used preferably one in the form of powder or in the granular form having a particle size of 10 to 1,000 μm and an apparent density of 0.3 to 1.2 g/cc.

To the fluorine-containing powder coating composition can be added optionally additives in an amount not lowering remarkably characteristics such as chemical resistance and heat resistance of the fluorine-containing resin. Examples of the additives are, for instance, pigments such as carbon powder, titanium oxide and cobalt oxide; reinforcing agents such as glass fiber powder, carbon fiber powder and mica; amine anti-oxidant; organic sulfur compound; organotin anti-oxidant; phenolic anti-oxidant; thermal stabilizer such as metal soap; leveling agent; anti-static agent; and the like.

The fluorine-containing powder coating composition and the additives may be admixed in the form of powder (dry method) or in the form of slurry (wet method), and the mixing in the form of powder is preferred. As the mixing equipment, there can be used a conventional mixer or pulverizer, for example, a sand mill, V blender, ribbon blender or the like.

The fluorine-containing powder coating composition is generally coated by electrostatic spray coating, fluid-bed dip coating, rotolining, etc., and then sintered at a temperature of not less than the melting point of the polymer and not more than its decomposition temperature depending on kind of the polymer, and thus a good coating film can be formed.

In general in case of electrostatic powder spray coating, a coating film having a thickness of 10 to 200 μm is formed, and in case of rotolining, a coating film having a thickness of 200 to 1,000 μm is formed.

Further the fluorine-containing ethylenic polymer having functional group which is used for a fluorine-containing coating material can be also used, by utilizing its adhesive property, as a primer layer for a fluorine-containing coating composition which has good heat resistance at the time when applying a fluorine-containing resin which has no functional group and is excellent in chemical resistance and non-sticking property on surfaces of substrates such as metal and glass. The obtained composite material having chemical resistance is one comprising a primer layer of a fluorine-containing ethylenic polymer having functional group on a substrate and a top layer of a fluorine-containing polymer having no functional group. It is a matter of course that a fluorine-containing ethylenic polymer having functional group may be used as a top coat layer.

The primer for a fluorine-containing coating composition comprises the above-mentioned fluorine-containing ethylenic polymer having functional group.

As the primer, the same fluorine-containing polymer as mentioned above can be used. The primer is selected optionally depending on kind of a substrate surface, kind of the fluorine-containing polymer to be applied through the primer (kind of a top coat), etc. It is preferable in general that the primer for a fluorine-containing coating composition is one which has the same structure as the fluorine-containing polymer to be applied thereon and contains a functional group.

That combination of the primer and top coat assures good compatibility between the fluorine-containing polymer to be used as the primer and the fluorine-containing polymer to be applied thereon, and can give not only good adhesion to the substrate surface but also good intercoat adhesive strength between the primer layer and the top coat layer. Also even in case of the use at high temperature, unlike the case where the primer mixed with other resin component is used, intercoat adhesion failure to be caused due to a difference in thermal shrinkage between the polymers, cracking, pin hole, etc. are hard to arise. Further since the whole coating film comprises the fluorine-containing polymer, it can be used sufficiently for applications requiring transparency and vivid coloring. Still further excellent chemical resistance, heat resistance, non-sticking property and friction resistance can be exhibited more effectively because a layer of fluorine-containing polymer having no functional group is formed on the outermost surface of the coating film.

Examples of the fluorine-containing polymer having no functional group and used for a top coat layer are PTFE, PFA, FEP, ETFE, PVdF and VdF copolymers.

As the primer for fluorine-containing coating composition, there can be used the above-mentioned fluorine-containing ethylenic polymer having functional group. In case where a substrate is coated with PTFE, it is preferable to use the primer selected from the reactive PTFE (I), reactive PFA and reactive FEP (II). It is particularly preferable to use, as the primer, thermo-melting reactive PFA or FEP (II) since it is possible to thermo-melt and strongly adhere to a substrate surface by sintering. In case where a substrate is coated with PFA or FEP, it is preferable to use, as the primer, reactive PFA or FEP (II). Further in case where a substrate is coated with ETFE, it is particularly preferable to use, as the primer, reactive ETFE (III) from the viewpoint of adhesion and transparency.

As a coating method using a primer layer, there can be used preferably a method of coating a fluorine-containing polymer, which mainly comprises the following three steps;

(First step) a step for applying, to a substrate surface, the primer for fluorine-containing coating composition comprising the above-mentioned fluorine-containing polymer having functional group,
(Second step) a step for applying a fluorine-containing coating composition comprising a fluorine-containing polymer having functional group or no functional group, to the primer layer formed in the above first step, and
(Third step) a step for sintering the laminated article obtained in the above first and second steps.

Further the primer layer applied in the above first step may be set by drying at 80° to 150°C for about 5 minutes to about 30 minutes prior to the second step (2 coats/1 bake) or may be sintered, for example, at a temperature of not less than the melting temperature thereof prior to the second step (2 coats/2 bakes).

The method for applying the primer in the first step is optionally selected depending on the form of the primer. For example, in case where the fluorine-containing primer is in the form of aqueous dispersion, spray coating, spin coating, brush coating and dip coating methods are used. Also in case of the form of powder coating composition, coating methods such as electrostatic coating, fluid-bed dip coating and rotolining are employed.

A thickness of the primer layer may vary depending on purpose, application, kind of a substrate surface and coating method. The thickness is from 1 to 50 µm, preferably from 2 to 20 µm. Since the thickness of the primer is in general thin as mentioned above, it is preferable to coat the primer in the form of aqueous dispersion by spray coating, etc.

The method for applying the coating composition comprising a fluorine-containing polymer having functional group or no functional group to the primer layer in the second step is optionally selected depending on kind of the fluorine-containing polymer, form of the coating, purpose and application. For example, in case of an aqueous dispersion and organic solvent dispersion, usually spray coating, brush coating, roll coating and spin coating are carried out. In case of a powder coating composition, electrostatic coating, fluid-bed dip coating or rotolining are carried out.

A coating thickness of the fluorine-containing polymer in this step varies entirely depending on application of the composite material having chemical resistance and coating method. The thickness is in general from 5 to 50 µm, preferably from about 10 µm to about 30 µm in case of spray coating. When a thick coating film is desired by using a powder coating composition, it is possible to apply at a thickness of 20 to 2,000 µm in case of electrostatic coating, and at a thickness of 0.3 to 10 mm in case of rotolining.

Sintering conditions in the third step are optionally selected depending on kinds of fluorine-containing polymers (component, melting point, etc.) of the primer layer and the top layer thereon. The sintering is carried out in general at a temperature of not less than the melting point of the both fluorine-containing polymers. A sintering time varies depending on the sintering temperature, and is from five minutes to three hours, preferably from about 10 minutes to about 30 minutes. For example, when coating with PTFE, PFA and FEP, sintering is carried out at 300° to 400°C, preferably 320° to 380°C.

Then technique for applying the above-mentioned fluorine-containing ethylenic polymer having functional group in the form of film to produce a composite material having chemical resistance is explained.

Merits of applying in the form of film are as follows.

① A film comprising a fluorine-containing ethylenic polymer having functional group is advantageous from the viewpoint of processing since an applicator necessary for hot melt adhesive is not required, and the film can be adhered by thermocompression bonding while being put on a substrate or inserted between substrates.

② Further since a uniform adhesive layer is formed on the whole surface of substrate, a film free from nonuniform adhesion and having uniform adhesive strength can be obtained, and thus can be also applied to a substrate having poor or no compatibility therewith.

③ Further the film can be cut into various shapes, and thus is advantageous from the viewpoint of a small loss in processing work, good working environment and cost.

The preferred fluorine-containing polymer film of the present invention is one which is produced by molding the above-mentioned fluorine-containing ethylenic polymer having functional group. The film can be adhered to various substrates without surface treating and using usual adhesives, thereby giving excellent characteristics of a fluorine-containing polymer to a substrate.

Though it is possible to produce adhesive films from the above-mentioned fluorine-containing polymers having functional group by using various adhesives depending on purpose of the composite material having chemical resistance, film production process and adhering method, the above-mentioned copolymer (II) (reactive PFA or reactive FEP) or copolymer (III) (reactive ETFE) is preferred since the adhesive film itself has, in addition to chemical resistance, heat resistance, non-sticking property and mechanical properties; efficient film molding represented by melt-molding can be carried out; the film has good moldability; making the film thin and uniform is possible; and it is possible to melt the film by various thermocompression bonding methods to adhere strongly and beautifully to various substrates. Particularly preferred functional group is hydroxyl from the viewpoint of heat resistance.

A thickness of the fluorine-containing polymer film is selected depending on application of the composite material having chemical resistance and is not limited particularly. The thickness is from 10 to 3,000 μm, preferably from 20 to 500 μm, particularly preferably from 40 to 300 μm.

In case of too thin films, special production method is required; it is difficult to handle the film at the time of adhering; wrinkling, breaking and poor appearance occur easily; and there is a case where adhesive strength, mechanical strength, chemical resistance and weather resistance become insufficient. Too thick film is disadvantageous from the viewpoint of cost and workability at the time of bonding to one unit.

In the present invention, the fluorine-containing polymer film may be used alone or can be used in the laminated film comprising the film (adhesive layer) of fluorine-containing ethylenic polymer having functional group and the film (surface layer) of fluorine-containing ethylenic polymer having functional group or no functional group.

Namely one surface of the film is a layer comprising a fluorine-containing ethylenic polymer having functional group and has adhesive property to a substrate, and another surface of the film is a layer comprising usual fluorine-containing polymer. By bringing the surface of the fluorine-containing ethylenic polymer having functional group into contact to the substrate and adhering it to the substrate by thermocompression bonding, etc., excellent characteristics of the fluorine-containing polymer such as chemical resistance, non-sticking property, stain-proofing property, friction resistance, weather resistance and electrical properties (high frequency electrical insulation property) can be given to the composite material.

In the present invention, a thickness of the two-layered laminated film of fluorine-containing polymer is selected depending on application of the composite material having chemical resistance, and is not limited particularly. The total thickness of two layers is from 20 to 5,000 μm, preferably from 40 to 1,000 μm, particularly preferably from 100 to 500 μm.

A thickness of each layer which can be used is from 5 to 1,000 μm, preferably from 10 to 500 μm, particularly preferably from 10 to 200 μm of the adhesive layer, and from about 15 μm to about 4,995 μm, preferably from 30 to 990 μm, particularly preferably from 90 to 490 μm of the fluorine-containing polymer layer (surface layer).

The film for the surface layer may be adhered after adhering the film for the adhesive layer to a substrate.

To the film of fluorine-containing polymer having functional group can be optionally incorporated proper additives such as a reinforcing agent, filler, stabilizer, ultraviolet ray absorber, pigment, etc. in an amount not lowering characteristics of the film. Those additives make it possible to improve thermal stability, surface hardness, abrasion resistance, weather resistance and electrostatic charge, etc.

The fluorine-containing film of the present invention can be produced, depending on kind of polymers used and desired shape of the film, by various methods such as thermal melting method, extrusion method, cutting method, solvent-casting method and a method of applying a powder or an aqueous dispersion or organic solvent dispersion to form a continuous coating film.

For example, a polymer which comprises the above-mentioned reactive PTFE and is difficult to be melt-molded can be molded by compression molding, extrusion molding (ram extrusion, paste extrusion, roll press, etc.) or the like. A polymer such as reactive PFA, FEP or ETFE which is melt-moldable is molded by compression molding and extrusion molding, and melt-extrusion molding is particularly preferred from the viewpoint of productivity and product quality.

Bonding of the two films into one laminated film can be carried out by a method of overlapping the respective molded films for adhesive layer and surface layer and then compression-molding; a method of applying one fluorine-containing polymer to a molded film comprising another fluorine-containing polymer; a method of carrying out film molding and bonding of films at the same time through multilayer co-extrusion molding method, or the like method. Among them, the multi-layer co-extrusion molding method is preferred from the viewpoint of productivity and product quality.

Adhesion of the film of fluorine-containing polymer having functional group to a substrate is achieved through thermal activation by heating, etc. Further thermo-melting adhesion is preferable. Represented examples of the adhering method are heating roller method and heat press method. Also there are other methods such as high-frequency heating, microwave heating, vacuum compression (vacuum press, etc.) and pneumatic press. Those methods can be optionally selected depending on kind and shape of a substrate, condition and kind of film, etc.

Examples of the substrate on which the fluorine-containing polymer having functional group can be adhered, are a metallic substrate, ceramic substrate, synthetic resin substrate, and the like.

Metals of the metallic substrate encompass metal, alloys of two or more metals, metal oxide, metal hydroxide, metal salts such as carbonate and sulfate, etc. Among them, metal, metal oxide and alloys are more preferable from the viewpoint of adhesive property.

Examples of the metallic substrate are metals and metal compounds of aluminum, iron, nickel, titanium, molybdenum, magnesium, manganese, copper, silver, lead, tin, chromium, beryllium, tungsten and cobalt, alloys of two or more thereof, etc.

Examples of the alloys are alloy steels such as carbon steel, Ni steel, Cr steel, Ni-Cr steel, Cr-Mo steel, stainless steel, silicon steel and Permalloy; aluminum alloys such as Al-Cl, Al-Mg, Al-Si, Al-Cu-Ni-Mg and Al-Si-Cu-Ni-Mg; copper alloys such as brass, bronze, silicon bronze, silicon brass, nickel silver and nickel bronze; nickel alloys such as nickel manganese (D nickel), nickel-aluminum (Z nickel), nickel-silicon, Monel metal, Constantan, nichrome Inconel and Hastelloy; and the like.

Further as the aluminum-based metal, there can be used pure aluminum; aluminum oxide; and aluminum alloys for casting and expanding such as Al-Cu, Al-Si, Al-Mg, Al-Cu-Ni-Mg, Al-Si-Cu-Ni-Mg alloys, high tensile aluminum alloy and corrosion resistant aluminum alloy.

Also as the iron-based metals, there can be used pure iron, iron oxide, carbon steel, Ni steel, Cr steel, Ni-Cr steel, Cr-Mo steel, Ni-Cr-Mo steel, stainless steel, silicon steel, Permalloy, non-magnetic steel, magnet steel, cast steel, etc.

Also the fluorine-containing polymer having functional group can be adhered to a substrate which was subjected to, for the purpose of preventing corrosion of metal, coating of other metal by electroplating, hot dipping, chromatizing, siiconizing, colorizing, sheradizing, metal spraying, etc.; forming a phosphate film by phosphatization; forming metal oxide by anodizing or heat-oxidizing; or electrochemical corrosion prevention.

Further for the purpose of enhancing adhesion, the surface of metallic substrate may be subjected to chemical preparation with a phosphoric acid, sulfuric acid, chromic acid, oxalic acid, etc., or may be subjected to surface roughening by sand blasting, shot blasting, grit blasting, honing, paper scratching, wire scratching, hair line finishing, etc. For the purpose of exhibiting clear surface pattern of the substrate, the metal surface may be subjected to coloring, printing, etching, etc.

In case of the above-mentioned aluminum or aluminum alloy substrate, in order to enhance corrosion resistance, surface hardness and adhesive property of the substrate, it is possible to form an oxide film (alumite) on the substrate by anodizing with caustic soda, oxalic acid, sulfuric acid or chromic acid and also use the aluminum or aluminum alloy substrate subjected to other surface treatments mentioned above.

Further there may be used a substrate plated, on its surface, with other metal as mentioned above, for example, steel plate subjected to hot-dip zinc-plating, hot-dip zinc alloy plating, aluminum plating, zinc-nickel plating, zinc-aluminum plating, or the like; a substrate coated with other metal by diffusion coating or thermal spraying; a substrate, on which an oxide film is formed by chemical conversion treatment with chromic acid or phosphoric acid or heat-treatment; a substrate subjected to electric corrosion preventing treatment (for example, galvanized steel plate); or the like.

Examples of the ceramic substrate are, for instance, glass, pottery, porcelain, quartz, etc.

Components of glass are not particularly limited. Examples are silica glass, lead glass, non-alkali glass, alkali glass, etc.

Examples of the synthetic resin substrate are, for instance, an acrylic resin, polycarbonate, polypropylene, heat resistant engineering plastic, thermosetting resin, etc.

Examples of the substrate used usually for the composite material having chemical resistance of the present invention are all of those mentioned above, and as metallic substrates which are used in many cases are, for instance,

① cold rolled steel sheet,

② plated steel sheet, for example, Zn-plated steel sheet, Zn alloy-plated steel sheet, Al-plated steel sheet, Al alloy-plated steel sheet, Cr-plated steel sheet (TFS), Ni-plated steel sheet, Cu-plated steel sheet, galvanized steel sheet,

etc.,

③ aluminum sheet,
④ titanium sheet,
⑤ stainless steel sheet,

and the like.

In addition, where transparency is required, a ceramic substrate of glass and a synthetic resin substrate of acrylic resin and polycarbonate are usually used.

Also in case where transparency is required and elution of particularly sodium ion is not desired, quartz is used.

It is preferable that the form of the substrate is the same as a form of a finished product using the composite material having chemical resistance from the viewpoint that there is a case where processability is difficult after a coating film, etc. is formed.

The composite material of the present invention can be used on various vessels and piping materials firstly because the fluorine-containing resin on its surface has excellent chemical resistance, secondarily because the fluorine-containing resin is applied to a substrate with good adhesive property and thirdly because the fluorine-containing resin possesses good transparency, heat resistance, stain-proofing property, water- and oil repelling property, and the like.

Non-restricted examples of vessels and piping materials and parts thereof to which the composite material having chemical resistance of the present invention can be suitably applied are classified below by fields they belong to.

[1] Vessels

① Chemicals tank (stationary tank, transportation tank)

Chemicals: Industrial chemicals such as acids, alkalis (organic or inorganic), halogens and organic solvents
Application: Inner lining
Substrate: SUS, iron, glass and quartz
Fluorine-containing polymer having functional group: Reactive PTFE, reactive PFA or FEP, reactive ETFE and reactive PVdF
Form of polymer to be applied: Coating and film
Effect: Processability, chemical resistance and less permeation of chemicals

② Bottle

Chemicals: Industrial chemicals such as acids, alkalis (organic or inorganic), halogens and organic solvents
Application: Inner lining
Substrate: Glass, SUS and aluminum
Fluorine-containing polymer having functional group: Reactive PTFE, reactive PFA or FEP, reactive ETFE and reactive PVdF
Form of polymer to be applied: Coating and film
Effect: Processability, transparency, chemical resistance and less permeation of chemicals

③ Wafer basket

Chemicals: Etchants such as hydrochloric acid, sulfuric acid, nitric acid, hydrofluoric acid, aqueous ammonium fluoride, hydrogen peroxide and aqueous ammonia, alcohols and hydrochloric and fluoric solvents for washing
Application: Surface
Substrate: SUS
Fluorine-containing polymer having functional group: Reactive PTFE and reactive PFA or FEP
Form of polymer to be applied: Coating and film
Effect: Processabiity, chemical resistance and less permeation of chemicals

④ Bomb

Chemicals: Corrosive gases such as chlorine, hydrogen chloride gas, liquid ammonia and $H_2S$
Application: Inner lining
Substrate: SUS and iron
Fluorine-containing polymer having functional group: Reactive PTFE, reactive PFA or FEP, reactive ETFE and reactive PVdF
Form of polymer to be applied: Coating and film
Effect: Processability, chemical resistance and less permeation of chemicals

[2] Piping materials

① Pipe

Chemicals: Industrial chemicals such as acids, alkalis (organic or inorganic), halogens and organic solvents and chemicals for chemical reaction
Application: Inner lining
Substrate: SUS and iron
Fluorine-containing polymer having functional group: Reactive PTFE, reactive PFA or FEP, reactive ETFE and reactive PVdF
Form of polymer to be applied: Coating (powder), film and tube
Effect: Processability, chemical resistance and less permeation of chemicals

② Joint (elbow, coupling, etc.)

Chemicals: Industrial chemicals such as acids, alkalis (organic or inorganic), halogens and organic solvents and chemicals for chemical reaction
Application: Inner surface
Substrate: SUS and iron
Fluorine-containing polymer having functional group: Reactive PTFE, reactive PFA or FEP, reactive ETFE and reactive PVdF
Form of polymer to be applied: Coating (powder) and film
Effect: Processabiity, chemical resistance and less permeation of chemicals

③ Valve

Chemicals: Industrial chemicals such as acids, alkalis (organic or inorganic), halogens and organic solvents and chemicals for chemical reaction
Application: Inner surface contacting to chemicals
Substrate: SUS and iron
Fluorine-containing polymer having functional group: Reactive PTFE, reactive PFA or FEP, reactive ETFE and reactive PVdF
Form of polymer to be applied: Coating (powder) and film
Effect: Processabiity, chemical resistance and less permeation of chemicals

[3] Production equipment for industrial use (chemical, semi-conductor, food, etc.)

① Tank and tower

Chemicals: Industrial chemicals such as acids, alkalis (organic or inorganic), halogens and organic solvents and chemicals for chemical reaction
Application: Inner surface and part contacting to chemicals
Substrate: SUS and iron
Fluorine-containing polymer having functional group: Reactive PTFE, reactive PFA or FEP, reactive ETFE and reactive PVdF
Form of polymer to be applied: Coating (powder), film and tube
Effect: Processability, chemical resistance and less permeation of chemicals

② Pump

Chemicals: Industrial chemicals such as acids, alkalis (organic or inorganic), halogens and organic solvents and chemicals for chemical reaction
Application: Casing and part contacting to chemicals
Substrate: SUS and iron
Fluorine-containing polymer having functional group: Reactive PTFE, reactive PFA or FEP, reactive ETFE and reactive PVdF
Form of polymer to be applied: Coating (powder), film and tube
Effect: Processability, chemical resistance and less permeation of chemicals

EXAMPLES

The composite materials having chemical resistance of the present invention are then explained by means of preparation examples and examples, but the present invention is not limited to those examples.

PREPARATION EXAMPLE 1

(Preparation of aqueous dispersion comprising PFA having hydroxyl)

A 3-liter glass-lined autoclave equipped with a stirrer, valve, pressure gauge and thermometer was charged with 1,500 ml of pure water and 9.0 g of ammonium perfluorooctanoate. After replacing with nitrogen gas sufficiently, the autoclave was evacuated and charged with 20 ml of ethane gas.
Then 3.8 g of perfluoro-(1,1,9,9-tetrahydro-2,5-bistrifluoromethyl-3,6-dioxa-8-nonenol) (formula (7)):

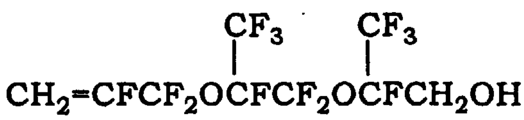

(7)

and 18 g of perfluoro(propyl vinyl ether) (PPVE) were fed into the autoclave with pressurized nitrogen gas, and a temperature inside the system was maintained at 70°C.
Pressurized tetrafluoroethylene (TFE) gas was introduced into the autoclave with stirring so that the inside pressure of the autoclave became 8.5 $kgf/cm^2G$.
Then a solution prepared by dissolving 0.15 g of ammonium persulfate in 5.0 g of water was added with pressurized nitrogen gas to initiate the reaction.
Since the pressure lowered with the advance of the polymerization reaction, it was increased again to 8.5 $kgf/cm^2G$ by feeding tetrafluoroethylene gas at the time when it lowered to 7.5 $kgf/cm^2G$. Thus the decreasing and increasing of the pressure was repeated.
With continuing supply of tetrafluoroethylene, every time when about 40 g of tetrafluoroethylene gas was consumed after starting of the polymerization, 1.9 g of the above-mentioned fluorine-containing ethylenic monomer having hydroxyl (compound represented by the formula (7)) was introduced under pressure three times (5.7 g in total) to continue the polymerization. At the time when about 160 g of tetrafluoroethylene gas was consumed after starting of the polymerization, the supplying thereof was terminated and the autoclave was cooled and the un-reacted monomer was released to give 1,702 g of a bluish semi-transparent aqueous dispersion.

A concentration of the polymer in the obtained aqueous dispersion was 10.9 %, and a particle size measured by dynamic light scattering method was 70.7 nm.

Also a part of the obtained aqueous dispersion was sampled and subjected to freeze coagulation, and the precipitated polymer was rinsed and dried to isolate a white solid. Components and their amounts of the obtained copolymer which were determined through $^{19}$F-NMR and IR analyses were TFE/PPVE/(Fluorine-containing ethylenic monomer having hydroxyl and represented by the formula (7)) = 97.7/1.2/1.1 % by mole.

In infrared spectrum, characteristic absorption of -OH was observed at 3,620 to 3,400 $cm^{-1}$.

According to DSC analysis, Tm was 310°C, and according to DTGA analysis, 1 % thermal decomposition temperature Td was 368°C. A melt flow rate measured under conditions of preheating at 372°C for five minutes at a load of 7 $kgf/cm^2$ by using Koka-type flow tester and nozzles of 2 mm diameter × 8 mm length was 12.0 g/10 min.

PREPARATION EXAMPLE 2

(Preparation of aqueous dispersion comprising PFA having hydroxyl)

The same autoclave as in Preparation Example 1 was charged with 1,500 ml of pure water and 9.0 g of ammonium perfluorooctanoate. After replacing with nitrogen gas sufficiently, the autoclave was evacuated and charged with 20 ml of ethane gas.

Then 1.9 g of perfluoro-(1,1,9,9-tetrahydro-2,5-bistrifluoromethyl-3,6-dioxa-8-nonenol) (compound of the formula (7)) and 16.1 g of perfluoro(propyl vinyl ether) (PPVE) were fed into the autoclave with pressurized nitrogen gas, and a temperature inside the system was maintained at 70°C.

Pressurized tetrafluoroethylene (TFE) gas was introduced into the autoclave with stirring so that the inside pressure became 8.5 $kgf/cm^2$G.

Then a solution prepared by dissolving 0.15 g of ammonium persulfate in 5.0 g of water was fed with pressurized nitrogen gas to initiate the reaction.

Since the pressure lowered with the advance of the polymerization reaction, at the time when the pressure lowered down to 7.5 $kgf/cm^2$G, it was increased again to 8.5 $kgf/cm^2$G with tetrafluoroethylene gas, and the decreasing and increasing of the pressure were repeated.

With continuing supply of tetrafluoroethylene, every time when 40 g of tetrafluoroethylene gas was consumed after starting of the polymerization, 0.95 g of the fluorine-containing ethylenic monomer having hydroxyl (compound represented by the formula (7)) was introduced three times (2.85 g in total) under pressure to continue the polymerization. When 160 g of tetrafluoroethylene was consumed after starting of the polymerization, the supplying thereof was terminated. The autoclave was cooled and the un-reacted monomer was released to give 1,692 g of an aqueous dispersion. A concentration of the polymer in the obtained aqueous dispersion was 10.6 % and a particle size thereof was 76.8 nm.

A part of the aqueous dispersion was sampled, and a white solid was isolated in the same manner as m Preparation Example 1.

The same analysis as above of the obtained white solid indicates:

TFE/PPVE/(Fluorine-containing monomer having hydroxyl and represented by the formula (7)) = 98.3/1.1/0.6 % by mole
Tm = 310°C
1 % Thermal decomposition temperature Td = 374°C
Melt flow rate: 9.5 g/10 min

In infrared spectrum, characteristic absorption of -OH was observed at 3,620 to 3,400 $cm^{-1}$.

PREPARATION EXAMPLE 3

(Synthesis of aqueous dispersion of PFA having no functional group)

Emulsion polymerization was carried out in the same manner as in Preparation Example 1 except that perfluoro-(1,1,9,9-tetrahydro-2,5-bistrifluoromethyl-3,6-dioxa-8-nonenol) (compound of the formula (7)) was not used, and

1,662 g of an aqueous dispersion of PFA having no functional group was obtained.

A concentration of the polymer in the aqueous dispersion was 9.7 %, and a particle size thereof was 115 nm.

A white solid was isolated and analyzed in the same manner as in Preparation Example 1.

TFE/PPVE = 98.9/1.1 % by mole
Tm = 310°C
1 % Thermal decomposition temperature Td = 479°C
Melt flow rate: 19.2 g/10 min

In infrared spectrum, no characteristic absorption of -OH was observed.

PREPARATION EXAMPLE 4

(Synthesis of PFA having hydroxyl)

A 6-liter glass-lined autoclave equipped with a stirrer, valve, pressure gauge and thermometer was charged with 1,500 ml of pure water. After replacing with nitrogen gas sufficiently, the autoclave was evacuated and charged with 1,500 g of 1,2-dichloro-1,1,2,2-tetrafluoroethane (R-114).

Then 5.0 g of perfluoro-(1,1,9,9-tetrahydro-2,5-bistrifluoromethyl-3,6-dioxa-8-nonenol) (compound of the formula (7)), 130 g of perfluoro(propyl vinyl ether) (PPVE) and 180 g of methanol were fed into the autoclave with pressurized nitrogen gas, and a temperature inside the system was maintained at 35°C.

Pressurized tetrafluoroethylene (TFE) gas was introduced into the autoclave with stirring so that the inside pressure became 8.0 kgf/$cm^2$G. Then 0.5 g of a 50 % methanol solution of di-n-propyl peroxydicarbonate was fed with pressurized nitrogen to initiate the reaction.

Since the pressure lowered with the advance of the polymerization reaction, at the time when the pressure lowered down to 7.5 kgf/$cm^2$G, it was increased again to 8.0 kgf/$cm^2$G with tetrafluoroethylene gas, and the decreasing and increasing of the pressure were repeated.

With continuing supply of tetrafluoroethylene, every time when about 60 g of tetrafluoroethylene gas was consumed after starting of the polymerization, 2.5 g of the fluorine-containing ethylenic monomer having hydroxyl (compound represented by the formula (7)) was introduced nine times (22.5 g in total) under pressure to continue the polymerization. When about 600 g of tetrafluoroethylene was consumed after starting of the polymerization, the supplying thereof was terminated. The autoclave was cooled and the un-reacted monomer and R-114 were released.

The obtained copolymer was washed with water, rinsed with methanol and then vacuum-dried to give 710 g of a white solid. The composition of the obtained copolymer was TFE/PPVE/(Fluorine-containing ethylenic monomer having hydroxyl and represented by the formula (7)) = 97.0/2.0/1.0 % by mole according to $^{19}$F-NMR and IR analyses. In infrared spectrum, characteristic absorption of -OH was observed at 3,620 to 3,400 $cm^{-1}$. According to DSC analysis, Tm was 305°C, and according to DTGA analysis, 1 % thermal decomposition temperature Td was 375°C. A melt flow rate measured under conditions of preheating at 372°C for five minutes at a load of 7 kgf/$cm^2$ by using Koka-type flow tester and nozzles of 2 mm diameter × 8 mm length was 32 g/10 min.

PREPARATION EXAMPLE 5

(Synthesis of PFA having hydroxyl)

A 6-liter glass-lined autoclave equipped with a stirrer, valve, pressure gauge and thermometer was charged with 1,500 ml of pure water. After replacing with nitrogen gas sufficiently, the autoclave was evacuated and charged with 1,500 g of 1,2-dichloro-1,1,2,2-tetrafluoroethane (R-114).

Then the reaction was initiated in the same manner as in Preparation Example 4 except that 2.5 g of perfluoro-(1,1,9,9-tetrahydro-2,5-bistrifluoromethyl-3,6-dioxa-8-nonenol) (formula (7)), 132 g of perfluoro(propyl vinyl ether) (PPVE) and 230 g of methanol were used. A temperature inside the system was maintained at 35°C.

Pressurized tetrafluoroethylene (TFE) gas was introduced into the autoclave with stirring so that the inside pressure of the autoclave became 8.0 kgf/$cm^2$G. Then 0.5 g of a 50 % methanol solution of di-n-propyl peroxydicarbonate was added with pressurized nitrogen gas to initiate the reaction.

Since the pressure lowered with the advance of the polymerization reaction, it was increased again to 8.0 kgf/$cm^2$G by feeding tetrafluoroethylene gas at the time when it lowered to 7.5 kgf/$cm^2$G. Thus the decreasing and increasing of the pressure was repeated.

Further 680 g of a white solid copolymer was obtained in the same manner as in Preparation Example 4 except that every time when about 60 g of tetrafluoroethylene gas was consumed after starting of the polymerization, 1.23 g of

the above-mentioned fluorine-containing ethylenic monomer having hydroxyl (compound represented by the formula (7)) was introduced under pressure nine times (11.10 g in total). Components and their amounts of the obtained copolymer which were determined through $^{19}F$-NMR and IR analyses were TFE/PPVE/(Fluorine-containing ethylenic monomer having hydroxyl and represented by the formula (7)) = 97.6/2.0/0.4 % by mole. In infrared spectrum, characteristic absorption of -OH was observed at 3,620 to 3,400 $cm^{-1}$. According to DSC analysis, Tm was 310°C, and according to DTGA analysis, a decomposition starting temperature was 368°C and 1 % thermal decomposition temperature Td was 375°C. A melt flow rate measured under conditions of preheating at 372°C for five minutes at a load of 7 $kgf/cm^2$ by using Koka-type flow tester and nozzles of 2 mm diameter × 8 mm length was 42 g/10 min.

PREPARATION EXAMPLE 6

(Synthesis of PFA having no functional group)

Synthesis was carried out in the same manner as in Preparation Example 4 except that perfluoro-(1,1,9,9-tetrahydro-2,5-bistrifluoromethyl-3,6-dioxa-8-nonenol) (compound represented by the formula (7)) was not used and 240 g of methanol was used, and thus 597 g of PFA having no functional group was obtained.
The obtained PFA was analyzed in the same manner as in Preparation Example 4 and the results were as follows.

TFE/PPVE = 98.2/1.8 % by mole
Tm = 310°C
Td = 469°C (1 % weight reduction)
Melt flow rate: 24 g/10 min

PREPARATION EXAMPLE 7

(Preparation of PFA powder coating composition having hydroxyl)

The PFA powder having hydroxyl (apparent specific gravity: 0.5, true specific gravity: 2.1, average particle size: 600 μm) and prepared in Preparation Example 4 was compressed into a sheet of 60 mm wide × 5 mm thick by a Roller Compactor (Model BCS-25 available from Shinto Kogyo Kabushiki Kaisha), and then crushed into about 10 mm diameter by a crusher and further finely pulverized at room temperature at 11,000 rpm by a pulverizer (Cosmomizer Model N-1 available from Kabushiki Kaisha Nara Kikai Seisakusho). Subsequently the coarse powder particles of not less than 170 mesh (88 μm of sieve opening) were separated by a classifier (Hibolder Model 300SD available from Shi-Tokyo Kikai Kabushiki Kaisha) to give a PFA powder coating composition having hydroxyl. An apparent density of the powder was 0.7 g/ml, and an average particle size thereof was 20 μm.

PREPARATION EXAMPLE 8

(Preparation of PFA powder coating composition having no functional group)

A PFA powder coating composition was prepared in the same manner as in Preparation Example 7 except that the PFA powder having no functional group (apparent specific gravity: 0.6, true specific gravity: 2.1, average particle size: 400 μm) and prepared in Preparation Example 6 was used instead of the PFA powder having hydroxyl and prepared in Preparation Example 4. An apparent density of the powder was 0.73 g/ml, and an average particle size thereof was 20 μm.

PREPARATION EXAMPLE 9

(Synthesis of fluorine-containing polymer prepared by using a non-fluorine-containing monomer having functional group)

A 1-liter stainless steel autoclave equipped with a stirrer, valve, pressure gauge and thermometer was charged with 250 g of butyl acetate, 36.4 g of vinyl pivalate (VPi) and as a non-fluorine-containing monomer having hydroxyl, 32.5 g of 4-hydroxybutyl vinyl ether (HBVE) and 4.0 g of isopropoxycarbonyl peroxide. After cooling to 0°C with ice and replacing with nitrogen gas sufficiently, the autoclave was evacuated and charged with 47.5 g of isobutylene (IB) and 142 g of tetrafluoroethylene (TFE).
The autoclave was heated to 40°C and reaction was carried out for 30 hours with stirring. At the time when the

inside pressure of the reaction vessel was lowered to not more than 2.0 kg/$cm^2$, the reaction was terminated. The autoclave was cooled and un-reacted gas monomer was released, and thus a butyl acetate solution of a fluorine-containing polymer was obtained. A polymer concentration was 45 %.

A fluorine-containing polymer was separated from the obtained butyl acetate solution of a fluorine-containing polymer through re-precipitation method, followed by sufficiently reducing pressure and drying, thus being separated in the form of white solid. According to $^1$H-NMR and $^{19}$F-NMR elementary analyses, the obtained fluorine-containing polymer was a copolymer of TFE/IB/VPi/HBVE = 44/34/15/7 % by mole.

PREPARATION EXAMPLE 10

(Production of film of PFA having hydroxyl)

A metal die of 100 mm diameter was charged with 8.0 g of the white solid obtained in Preparation Example 4 and set on a press machine of 350°C, followed by preheating for 30 minutes and then compression-molding at 70 kg/$cm^2$ for one minute. Thus a 0.5 mm thick film was obtained.

PREPARATION EXAMPLE 11

(Production of film of PFA having hydroxyl)

The same procedures as in Preparation Example 10 were repeated except that the white solid obtained in Preparation Example 5 was used, to give a 0.5 mm thick film.

PREPARATION EXAMPLE 12

(Production of film of PFA having no functional group)

The same procedures as in Preparation Example 10 were repeated except that the white solid obtained in Preparation Example 6 was used, to give a 0.5 mm thick film.

PREPARATION EXAMPLE 13

(Production of film of PFA having hydroxyl by extrusion)

The white solid obtained in Preparation Example 4 was extruded at 350° to 370°C by using a two screw extruder (LABOPLASTOMIL available from Toyo Seiki Kabushiki Kaisha) to give pellets. The pellets were extruded at 360° to 380°C at a roll temperature of 120°C by using a single screw extruder (LABOPLASTOMIL available from Toyo Seiki Kabushiki Kaisha) to give a film of 10 cm wide × 100 to 150 μm thick.

PREPARATION EXAMPLE 14

(Production of film of PFA having no functional group by extrusion)

The same procedures as in Preparation Example 13 were repeated except that the white solid obtained in Preparation Example 6 was used, to give pellets. Further extrusion was carried out in the same manner as in Preparation Example 13 to give a film of 10 cm wide × 100 to 150 μm thick.

PREPARATION EXAMPLE 15

(Production of laminated film of PFA having hydroxyl and PTFE)

The film of PFA having hydroxyl and obtained in Preparation Example 13 and a 0.5 mm thick PTFE film were overlapped and compression-molded in the same manner as in Preparation Example 10.

The two layers were adhered strongly.

PREPARATION EXAMPLE 16

(Production of film of PFA having hydroxyl by extrusion)

The same procedures as in Preparation Example 13 were repeated except that the white solid of PFA having hydroxyl and obtained in Preparation Example 5 was used instead of the white solid obtained in Preparation Example 4 to give an extruded film of 10 cm wide × 100 to 150 μm thick.

PREPARATION EXAMPLE 17

(Synthesis of PFA having hydroxyl)

A 6-liter glass-lined autoclave equipped with a stirrer, valve, pressure gauge and thermometer was charged with 1,500 ml of pure water. After replacing with nitrogen gas sufficiently, the autoclave was evacuated and charged with 1,500 g of 1,2-dichloro-1,1,2,2-tetrafluoroethane (R-114).

Then 10.2 g of perfluoro-(1,1,9,9-tetrahydro-2,5-bistrifluoromethyl-3,6-dioxa-8-nonenol) (compound represented by the formula (7)), 130 g of perfluoro(propyl vinyl ether) (PPVE) and 180 g of methanol were fed into the autoclave with pressurized nitrogen gas, and a temperature inside the system was maintained at 35°C.

Pressurized tetrafluoroethylene (TFE) gas was introduced into the autoclave with stirring so that the inside pressure became 8.0 kgf/cm$^2$G. Then 0.5 g of a 50 % methanol solution of di-n-propyl peroxydicarbonate was fed with pressurized nitrogen to initiate the reaction.

Since the pressure lowered with the advance of the polymerization reaction, at the time when the pressure lowered down to 7.5 kgf/cm$^2$G, it was increased again to 8.0 kgf/cm$^2$G with tetrafluoroethylene gas, and the decreasing and increasing of the pressure were repeated.

With continuing supply of tetrafluoroethylene, every time when about 60 g of tetrafluoroethylene gas was consumed after starting of the polymerization, 5.1 g of the fluorine-containing ethylenic monomer having hydroxyl (compound represented by the formula (7)) was introduced nine times (45.9 g in total) under pressure to continue the polymerization. When about 600 g of tetrafluoroethylene was consumed after starting of the polymerization, the supplying thereof was terminated. The autoclave was cooled and the un-reacted monomer and R-114 were released.

The obtained copolymer was washed with water, rinsed with methanol and then vacuum-dried to give 721 g of a white solid. The composition of the obtained copolymer was TFE/PPVE/(Fluorine-containing ethylenic monomer having hydroxyl and represented by the formula (7)) = 97.1/1.1/1.8 % by mole according to $^{19}$F-NMR and IR analyses. In infrared spectrum, characteristic absorption of -OH was observed at 3,620 to 3,400 cm$^{-1}$. According to DSC analysis, Tm was 311°C, and according to DTGA analysis, 1 % thermal decomposition temperature Td was 369°C. A melt flow rate measured under conditions of preheating at 372°C for five minutes at a load of 7 kgf/cm$^2$ by using Koka-type flow tester and nozzles of 2 mm diameter × 8 mm length was 85 g/10 min.

PREPARATION EXAMPLE 18

(Production of film of PFA having hydroxyl)

A 0.5 mm thick film was produced by compression-molding in the same manner as in Preparation Example 10 except that the white solid obtained in Preparation Example 15 was used.

EXAMPLE 1

(1) Pre-treatment of substrate

A 1.5 mm thick pure aluminum plate (A1050P) and a 1.5 mm thick SUS304 plate were degreased respectively with acetone. (2) Formation of primer layer comprising fluorine-containing polymer having functional group

An aqueous dispersion comprising PFA having hydroxyl and prepared in Preparation Example 1 was applied to the plate by an air spray so that a coating thickness would become about 5 μm, followed by infrared-drying at 90°C for 10 minutes and sintering at 380°C for 20 minutes.

(3) Formation of layer (top layer) comprising fluorine-containing polymer having no functional group

Onto the primer layer obtained in (2) above was applied an aqueous coating composition of PTFE (POLYFLON TFE Enamel EK4300CRN available from DAIKIN INDUSTRIES, LTD.) as a coating composition of fluorine-containing

polymer having no functional group by an air spray so that a coating thickness would become about 20 µm, followed by infrared-drying at 90°C for 10 minutes and sintering at 380°C for 20 minutes.

(4) Evaluation of adhesive property

The method of evaluation is as follows.

(Cross-cut adhesion test)

According to JIS K 5400 1990, 8. 5. 2, a coated surface was cross-cut to give 100 squares, and an adhesive tape (available from Nichiban Kabushiki Kaisha) is adhered to the cross-cut surface sufficiently. Then immediately the tape is torn off. This is repeated 10 times with new adhesive tapes to check to see how many squares remain among 100 squares. The results are shown in Table 1.

EXAMPLE 2

A coated plate was produced in the same manner as in Example 1 except that a primer layer was formed by using the aqueous dispersion comprising PFA having hydroxyl and obtained in Preparation Example 2 as a primer comprising a fluorine-containing polymer having functional group. The evaluation for adhesive property was carried out, and the results are shown in Table 1.

COMPARATIVE EXAMPLE 1

A coated plate was produced in the same manner as in Example 1 except that a primer layer was formed by using the aqueous dispersion comprising PFA having no functional group and obtained in Preparation Example 3 instead of a primer comprising a fluorine-containing polymer having functional group. The evaluation for adhesive property was carried out, and the results are shown in Table 1.

EXAMPLES 3 to 4 and COMPARATIVE EXAMPLE 2

Coated plates were produced in the same manner as in Example 1 in case of Example 3, in Example 2 in case of Example 4 and in Comparative Example 1 in case of Comparative Example 2 except that a top layer was formed by using an aqueous coating composition comprising FEP (NEOFLON FEP Dispersion ND-1 available from DAIKIN INDUSTRIES, LTD) as a coating composition comprising a fluorine-containing polymer having no functional group. The evaluation for adhesive property was carried out, and the results are shown in Table 1.

EXAMPLE 5

(1) Pre-treatment of substrate

Pre-treatment was carried out in the same manner as in Example 1.

(2) Formation of primer layer comprising fluorine-containing polymer having functional group

An aqueous dispersion comprising PFA having hydroxyl and prepared in Preparation Example 1 was applied to the plate by an air spray so that a coating thickness would become about 5 µm, followed by infrared-drying at 90°C for 10 minutes.

(3) Formation of layer (top layer) comprising fluorine-containing polymer having no functional group

Onto the primer layer obtained in (2) above was applied a powder coating composition of PFA (NEOFLON PFA Powder Coating Composition ACX-31 available from DAIKIN INDUSTRIES, LTD.) as a coating composition of fluorine-containing polymer having no functional group by electrostatic coating so that a coating thickness would become 40 µm, followed by sintering at 380°C for 20 minutes.

(4) Evaluation of adhesive property

The evaluation was carried out in the same manner as in Example 1, and the results are shown in Table 1.

EXAMPLE 6

A coated plate was produced in the same manner as in Example 5 except that a primer layer was formed by using the aqueous dispersion comprising PFA having hydroxyl and obtained in Preparation Example 2 as a primer comprising a fluorine-containing polymer having functional group. The evaluation for adhesive property was carried out, and the results are shown in Table 1.

COMPARATIVE EXAMPLE 3

A coated plate was produced in the same manner as in Example 5 except that a primer layer was formed by using the aqueous dispersion comprising PFA having no functional group and obtained in Preparation Example 3 instead of a primer comprising a fluorine-containing polymer having functional group. The evaluation for adhesive property was carried out, and the results are shown in Table 1.

EXAMPLE 7

(Evaluation of adhesive property of PFA powder coating composition having hydroxyl)

(1) Production of press sheet for adhesion test

About 4 g of the PFA powder coating composition having hydroxyl and prepared in Preparation Example 7 was put in a cylindrical metal mold of 60 mm diameter and compression-molded at room temperature at a pressure of 300 $kgf/cm^2$ with a press machine to give a disc-like cold press sheet (hereinafter also referred to as "PFA sheet").

(2) Pre-treatment of substrate

A pure aluminum plate of 100 × 100 × 1 (mm) was degreased with acetone and then subjected to sand blasting.

(3) Production of adhered sample

The PFA sheet obtained in (1) above was placed on the aluminum plate ((2) above) and put in a hot air dryer to heat and melt at 330°C for 10 minutes. Thus a sample produced by adhering the PFA sheet of about 450 μm thick to the aluminum plate was obtained. Fig. 1 shows a diagrammatic plan view of the adhered plate comprising the PFA sheet 1 and the aluminum plate 2.

(4) Measurement of adhesive strength

As shown in Fig. 1, the PFA sheet 1 of the adhered sample obtained in (3) above was cut with a cutter at intervals of a width a (10 mm) and one end of each strip-like sheet 1 was folded up, thus giving a test sample for measuring adhesive strength. Fig. 2 shows a diagrammatic perspective view of the test sample for measuring adhesive strength. As shown in Fig. 2, the sheet 1 was pulled up at an angle of 90° to the aluminum plate 2 to measure peeling strength. The adhesive strength was measured at room temperature at a cross head speed of 50 mm/min with TENSILON Universal Tester (available from Orientec Corporation). An adhesive strength was 5.5 kgf/cm as an average value of peel by area method.

COMPARATIVE EXAMPLE 4

(Evaluation of adhesive property of PFA powder coating composition having no functional group)

Production of a press sheet for adhesion test, pre-treatment of a substrate and production of an adhered sample were carried out in the same manner as in Example 7 except that the powder coating composition of PFA having no functional group and prepared in Preparation Example 8 was used instead of the powder coating composition of PFA having hydroxyl and prepared in Preparation Example 7. Then adhesive strength was measured.

Adhesive strength of the powder coating composition of PFA having no functional group was 0.8 kgf/cm.

EXAMPLE 8

(Electrostatic coating of powder coating composition of PFA having hydroxyl)

Electrostatic coating of the powder coating composition of PFA having hydroxyl and prepared in Preparation Example 7 was carried out on an aluminum plate pre-treated in the same manner as in Example 7 at room temperature at a voltage of 40 kV with an electrostatic coating machine (Model GX3300 available from Iwata Toso Kabushiki Kaisha). The coated plate was sintered at 330°C for 15 minutes with a hot air dryer to give a coating film.
The coating film was a continuous uniform transparent film and was adhered strongly to the aluminum plate.

COMPARATIVE EXAMPLE 5

(Heat resistance of fluorine-containing polymer prepared by using non-fluorine-containing monomer having functional group)

Thermal decomposition temperature of the fluorine-containing polymer prepared in Preparation Example 9 was measured through TGA analysis, and 1 % thermal decomposition temperature thereof was 220°C. Thereby it was seen that heat resistance of the fluorine-containing polymer prepared by using a non-fluorine-containing monomer having functional group like the polymer obtained in Preparation Example 9 was low.
Further the fluorine-containing copolymer obtained in Preparation Example 9 was dissolved in butyl acetate in a concentration of 10 % by weight.
Pre-treatment of a pure aluminum substrate, application of a primer layer comprising the fluorine-containing copolymer of Preparation Example 9 and application (electrostatic coating of PFA powder coating composition) of a top layer were carried out in the same manner as in Example 5 except that for the primer layer, the above-mentioned butyl acetate solution of the fluorine-containing copolymer of Preparation Example 9 was used instead of the aqueous dispersion of PFA having hydroxyl.
A coating film obtained by sintering at 380°C for 20 minutes after the application was colored yellow-brown, and foaming and peeling were also seen. Thus a uniform transparent coating film could not be obtained.

TABLE 1

| | Ex. 1 | Ex. 2 | Com. Ex. 1 | Ex. 3 | Ex. 4 | Com. Ex. 2 | Ex. 5 | Ex. 6 | Com. Ex. 3 |
|---|---|---|---|---|---|---|---|---|---|
| Fluorine-containing aqueous dispersion used for primer layer | Prep. Ex. 1 | Prep. Ex. 2 | Prep. Ex. 3 | Prep. Ex. 1 | Prep. Ex. 2 | Prep. Ex. 3 | Prep. Ex. 1 | Prep. Ex. 2 | Prep. Ex. 3 |
| Fluorine-containing resin forming top layer | PTFE | PTFE | PTFE | FEP | FEP | FEP | PFA | PFA | PFA |
| Evaluation of adhesion (Cross-cut test) SUS304 | 100/100 | 100/100 | 0/100 | 100/100 | 100/100 | 0/100 | 100/100 | 100/100 | 20/100 |
| Pure aluminum | 100/100 | 100/100 | 0/100 | 100/100 | 100/100 | 20/100 | 100/100 | 100/100 | 30/100 |

EXAMPLES 9 to 12

(Adhesion test of PFA film having hydroxyl to metal)

Adhesion test of a PFA film having hydroxyl (film of Preparation Example 10 or 11) to a metal plate was carried out in the manner mentioned below by using degreased chromate-treated aluminum, pure aluminum and steel plates of 0.5 mm thick. The results are shown in Table 2.

(Production of test piece for peeling test)

Fig. 3 is a diagrammatic perspective view of a laminated article made to produce a test piece for peeling test. As shown in Fig. 3, the PFA film having hydroxyl and obtained in Preparation Example 10 or 11 as an adhesive layer 3 and a 0.1 mm thick spacer 4 (aluminum foil) were put between the two metal plates 5 and then set on a press machine of 350°C, followed by preheating (20 minutes) and then compressing at 50 $kg/cm^2$ for one minute to give a laminated article of length b (150 mm) × width c (70 mm).

Each thickness of the adhesive layer 3 of the obtained laminated articles was 0.1 mm. Further the laminated article was cut to a width of 25 mm and the spacer portion was bent in the shape of T at a point apart by a distance e (100 mm) from one end of the laminated article to give a test piece for the peeling test. Fig. 4 is a diagrammatic perspective view of the obtained test piece for peeling test. In Fig. 4, numeral 3 represents an adhesive layer and numeral 5 represents metal plates.

(Peeling test)

The peeling test was carried out at room temperature at a cross head speed of 50 mm/min by using TENSILON Universal Tester available from Orientec Corporation according to T-type peeling test method of JIS K6854-1977. The results show the maximum peeling strength (kgf/25 mm) and minimum peeling strength (kgf/25 mm)

COMPARATIVE EXAMPLES 6 to 8

(Adhesion test of PFA film having no functional group to metal)

Production of test pieces and peeling test were carried out in the same manner as in Example 9 except that the PFA film having no functional group and obtained in Preparation Example 12 was used instead of the PFA film having hydroxyl and obtained in Preparation Example 10 or 11. The results are shown in Table 2.

EXAMPLES 13 to 14

(Adhesion test of film of PFA having hydroxyl to glass)

Adhesion test of PFA having hydroxyl to Pyrex glass plate of 30 × 20 × 5 mm was carried out in the manner mentioned below.

Further hot water resistance test and methanol dipping test of the laminated article after the adhesion were carried out. The results are shown in Table 3.

(Production of test piece for tensile shear test)

Fig. 5 is a diagrammatic perspective view of a test piece for tensile shear test. As shown in Table 5, the PFA film having hydroxyl as an adhesive layer 3 which was obtained in Preparation Example 10 or 11 (length f of 10 m, width g of 20 mm, thickness h of 0.1 mm) was put between the Pyrex glass plates 6 (length i of 30 m, width g of 20 mm, thickness j of 5 mm), and a load of 3 kg was applied, followed by allowing to stand at 350°C for 30 minutes in an electric oven to give a test piece. A thickness of the adhesive layer 3 was adjusted to 0.1 mm with a spacer.

(Adhesive strength)

Fig. 6 is a diagrammatic perspective view of a test device to be used for measuring adhesive strength by tensile shearing method. As shown in Fig. 6, the test piece 7 obtained as mentioned above and test jigs 8 matching the shape of the test piece were set on TENSILON Universal Tester 9 available from Orientec Corporation, and then the tensile shearing test was carried out at a cross head speed of 20 mm/min. The results of the measurement are shown by max-

imum adhesive strength ($kgf/cm^2$).

(Hot water resistance test)

The test piece obtained as mentioned above was immersed in 50°C hot water to check to see adhesion after a lapse of 6 hours and measure adhesive strength ($kgf/cm^2$) after a lapse of 72 hours.

(Methanol dipping test)

The test piece obtained as mentioned above was dipped in methanol of room temperature to check to see its adhesion.

COMPARATIVE EXAMPLE 9

(Adhesion of film of PFA having no functional group to glass)

Production of a test piece and various tests were carried out in the same manner as in Example 13 except that the PFA film having no functional group and obtained in Preparation Example 12 was used instead of the PFA film having hydroxyl and obtained in Preparation Example 10 or 11. The results are shown in Table 3.

EXAMPLE 15

(Tests for adhesion and post-processability after lamination of PFA film having hydroxyl to stainless steel)

A laminated test piece was produced in the manner mentioned below by using a degreased SUS304 stainless steel plate of 150 mm long × 70 mm wide × 0.5 mm thick as a metal plate. The PFA film having hydroxyl and produced in Preparation Example 13 and the PFA film having no functional group and produced in Preparation Example 14 were cut to the same size as the above-mentioned SUS plate.

Further a polyimide film (Kapton 200-H available from E.I. Du Pont) which was used for separation was also cut to the same size as above.

Fig. 7 is a diagrammatic cross-sectional view of a laminated test plate. As shown in Fig. 7, the PFA film 12 having hydroxyl, the PFA film 13 having no functional group and the polyimide film 14 were put between the two SUS plates 11, and then set on a press machine preset at 350°C, followed by preheating (20 minutes) and then pressing at 50 $kgf/cm^2$ for one minute to give a laminated test plate.

After cooling, when the SUS plate 11 contacting the polyimide film 14 was removed, the polyimide film was peeled from the interface with the PFA film 13 having no functional group spontaneously.

As a result, a three-layered laminated article having good transparency and comprising the PFA film 12 having hydroxyl as an adhesive layer, the SUS plate 11 and the PFA film 13 was obtained. Fig. 8 is a diagrammatic cross-sectional view of the obtained three-layered laminated article.

Further the surface film of the obtained three-layered laminated article was cross-cut with a cutting knife so that a cut depth reached to the surface of the SUS plate 11, and a hundred pieces of 1 mm squares of lattice pattern were made. A center of the square was pushed out by 5 mm with Erichsen tester. As a result, the PFA film 12 having hydroxyl was not peeled off at all and kept adhered strongly to the SUS plate 11 which was a substrate.

The PFA film 12 exhibited strong adhesion to the SUS plate 11.

COMPARATIVE EXAMPLE 10

(Tests for adhesion and post-processability after lamination of PFA film having no functional group to stainless steel)

A laminated article comprising the SUS plate 11 and the PFA film 13 having no functional group was produced in the same manner as in Example 15 except that the PFA film having hydroxyl was not used. Fig. 9 is a diagrammatic cross-sectional view of the obtained laminated article.

The film seemed to be adhered, but the PFA film 13 having no functional group could be peeled off from the SUS plate 11 easily.

Further Erichsen test was carried out in the same manner as in Example 15, and 60 pieces among 100 cross-cut squares were peeled off from the cut line.

EXAMPLE 16

(Adhesion test of PFA film having hydroxyl and polyimide film)

The PFA film 12 having hydroxyl and obtained in Preparation Example 13, the PFA film 13 having no functional group and obtained in Preparation Example 14 and the polyimide film 14 were cut to the same size as in Example 15, and put between the two SUS plates 11, followed by heating with a press machine in the same manner as in Example 15 to give a laminated test plate. Fig. 10 shows a diagrammatic cross-sectional view of the obtained laminated test plate. Then after cooling, the SUS plate 11 was removed to obtain a laminated article. Fig. 11 is a diagrammatic cross-sectional view of the obtained laminated article. Further the laminated article was cut to a width of 25 mm.

Fig. 12 is a diagrammatic cross-sectional view of the above-mentioned laminated article to be subjected to T-type peeling test. In Fig. 12, a part of interface between the polyimide film 14 and the PFA film 12 having hydroxyl was peeled, and the T-type peeling test by peeling in the direction of an arrow shown in Fig. 12 was carried out in the same manner as in Example 1. The adhesive strength was 4.0 kgf/25 mm as an average value of peel according to area method.

COMPARATIVE EXAMPLE 11

(Adhesion test of PFA film having no functional group and polyimide film)

Fig. 13 is a diagrammatic cross-sectional view of a laminated article to be subjected to T-type peeling test in the same manner as in Example 1. In Fig. 13, a part of interface between the polyimide film 14 and the PFA film 13 having no functional group of the 25 mm wide laminated article obtained in Example 16 was peeled, and the T-type peeling test by peeling in the direction of an arrow shown in Fig. 13 was carried out in the same manner as in Example 16, but no adhesive property was exhibited.

COMPARATIVE EXAMPLE 12

(Heat resistance of fluorine-containing polymer prepared by using non-fluorine-containing monomer having functional group)

A thermal decomposition temperature of the fluorine-containing polymer obtained in Preparation Example 9 was measured through TGA analysis, and 1 % thermal decomposition temperature was 220°C. From that, it is seen that the fluorine-containing polymer as prepared in Preparation Example 9 by using a non-fluorine-containing monomer having functional group has low heat resistance.

Further the fluorine-containing polymer prepared in Preparation Example 9 was dissolved in butyl acetate in a concentration of 10 % by weight.

To the aluminum plate pre-treated in the same manner as in Example 9 was applied the above-mentioned butyl acetate solution of fluorine-containing polymer of Preparation Example 9 by an air spray so that a coating thickness would become about 10 μm, followed by infrared-drying at 90°C for 10 minutes.

On the coating film 16 of the fluorine-containing polymer prepared by using a non-fluorine-containing monomer having functional group were placed in order the PFA film 13 having no functional group and prepared in Preparation Example 14, the polyimide film 14 for separation (same as in Example 15) and the aluminum plate 15, followed by heating and pressing at 350°C with a press machine in the same manner as in Example 15 to give a laminated test plate. A diagrammatic cross-sectional view of the obtained laminated test plate is shown in Fig. 14.

After cooling the laminated test plate, the aluminum plate 15 contacting the polyimide film 14 and the polyimide film 14 were removed to give a laminated article.

The obtained laminated article was colored yellow-brown, and foaming and peeling occurred between the PFA film 13 and the aluminum plate 15. Thus a uniform transparent laminated article could not be obtained.

TABLE 2

| | Ex. 9 | Ex. 10 | Com. Ex. 6 | Ex. 11 | Com. Ex. 7 | Ex. 12 | Com. Ex. 8 |
|---|---|---|---|---|---|---|---|
| Kind of fluorine-containing adhesive | Prep. Ex. 10 | Prep. Ex. 11 | Prep. Ex. 12 | Prep. Ex. 10 | Prep. Ex. 12 | Prep. Ex. 10 | Prep. Ex. 12 |
| Kind of metal plate | Chromate-treated aluminum | Chromate-treated aluminum | Chromate-treated aluminum | Pure aluminum | Pure aluminum | Dull-finished steel sheet | Dull-finished steel sheet |
| Maximum peeling strength (kgf/25 mm) | 15.4 | 11.3 | 1.8 | 9.5 | 1.5 | 22.4 | 2.0 |
| Minimum peeling strength (kgf/25 mm) | 7.2 | 2.1 | 0.18 | 2.5 | 0.15 | 12.4 | 0.20 |

TABLE 3

| | Ex. 13 | Ex. 14 | Com. Ex. 9 |
|---|---|---|---|
| Kind of fluorine-containing adhesive | Prep. Ex. 10 | Prep. Ex. 11 | Prep. Ex. 12 |
| Kind of substrate | Pyrex glass | Pyrex glass | Pyrex glass |
| Adhesion strength ($kgf/cm^2$) | 83 or more<br>Breaking of glass | 83 or more<br>Breaking of glass | 59<br>Peeling |
| Hot water resistance test (50°C) Adhesive strength ($kgf/cm^2$) 6 hours after | Adhesion was maintained. | Adhesion was maintained. | Spontaneous peeling |
| 72 hours after | 63 | 10 | - |
| Methanol dip test (room temperature) 24 hours after | Adhesion was maintained. | - | Spontaneous peeling |
| 72 hours after | Adhesion was maintained. | - | - |

EXAMPLE 17

(Adhesion test of PFA film having hydroxyl to quartz glass)

Production of a test piece and measurement of adhesive strength were carried out in the same manner as in Example 13 except that instead of the Pyrex glass used in Example 13, a quartz glass having the same shape as the Pyrex glass was used.

The PFA film having hydroxyl exhibited strong adhesion to the quartz glass. The quartz glass was broken and the adhesive strength measured was not less than 83 $kgf/cm^2$.

EXAMPLES 18 to 19

(Chemical resistance test of PFA having hydroxyl)

Chemical resistance test was carried out in the manner mentioned below by using test pieces produced by

cutting the extruded films (100 μm thick) of PFA having hydroxyl obtained in Preparation Example 13 (Example 18) and Preparation Example 16 (Example 19) into the form of type 5 dumbbell of ASTM D638.

(Chemical resistance test)

The test pieces were immersed in chemicals shown in Table 4, and allowed to stand at 60°C (at 23°C in case of aqueous ammonia) for seven days in a constant temperature tank. Then the test pieces were withdrawn from the tank, and the chemicals attached to the surfaces of the respective test pieces were wiped off. The following measurements were carried out.

① Change in appearance

When the test pieces are free from a change in appearance such as color change, turbidity in white and deformation before and after the immersing, they are evaluated as good and marked ○. The results are shown in Table 4.

② Change in weight

A weight of the respective test pieces after the immersing was measured, and a rate of change in weight was calculated from the following equation.

Rate of change in weight (%) = [(Weight of test piece after test (g)) - (Weight of test piece before test (g))]/(Weight of test piece before test (g)) (× 100)

The results are shown in Table 4.

③ Change in mechanical properties

A tensile test was carried out at room temperature at a cross head speed of 10 mm/min by using the test pieces in the form of dumbbell before and after the test with TENSILON Universal Tester (available from Orientec Corporation) according to ASTM D638. With respect to the respective test pieces, tensile strength and elongation were measured, and retention ratio thereof were calculated from the following equation.

Strength retention ratio (%) = Tensile strength after test ($kgf/cm^2$)/Tensile strength before test ($kgf/cm^2$) × 100

Elongation retention ratio (%) = Elongation before test (%)/Elongation after test (%) × 100

The results are shown in Table 5.

④ Change in adhesive strength (only Example 18)

The extruded film (thickness 100 μm) of PFA having hydroxyl which was obtained in Preparation Example 13 was used instead of the test pieces in the form of dumbbell. The film was cut to pieces of a rectangular shape of 150 mm × 70 mm, and the cut films were immersed in various chemicals in the same manner as above. After the test, the chemicals attached to the surfaces of the cut films were wiped off and the films were put in a dryer of 120°C to be dried for three hours. With respect to the films before the immersing (film of Preparation Example 13) and the cut films after immersed in various chemicals and then dried, adhesive strength to a pure aluminum plate (thickness 0.5 mm) was measured and compared in the manner mentioned below.

i) Production of test piece for peeling test

Fig. 3 is a diagrammatic perspective view of a laminated article for producing a test piece for peeling test. As shown in Fig. 3, the film before or after the immersing (film of Preparation Example 13) as an adhesive layer 3 and a spacer 4 (aluminum foil) having a thickness of 0.1 mm were put between the two metal plates 5 and set on a press machine preset at 320°C, followed by preheating (20 minutes) and then pressing at 50 $kg/cm^2$ for one minute. Thus a laminated article having a length b (150 mm) and a width c (70 mm) was obtained.
A thickness of any of the adhesive layers 3 of the obtained laminated article was 0.1 mm. Further the laminated article was cut to a width of 25 mm, and the spacer portion was folded in the form of T at a distance e (100 mm) from

one end, thus giving a test piece for peeling test. Fig. 4 is a diagrammatic perspective view of a test piece for peeling test. In Fig. 4, numeral 3 represent an adhesive layer and numeral 5 represent metal plates.

ii) Peeling test

Measurement was made at room temperature at a cross head speed of 50 mm/min by using TENSILON Universal Tester (available from Orientec Corporation) according to T-type peeling test method of JIS K 6854-1977. Peeling strength (kgf/25 mm) was calculated by area method. The results are shown in Table 6.

COMPARATIVE EXAMPLE 13

Chemical resistance test for various chemicals was carried out m the same manner as in Example 18 except that the film of PFA having no hydroxyl which was produced in Preparation Example 14 was used instead of the film of PFA having hydroxyl which was produced in Preparation Example 13. Measurement was made in the same manner as in Example 18 with respect to a change in appearance, weight and mechanical properties. The results are shown in Tables 4 and 5.

TABLE 4

| | Ex. 18 | | Ex. 19 | | Com. Ex. 13 | |
|---|---|---|---|---|---|---|
| Kind of fluorine-containing polymer | Prep. Ex. 13 PFA film having hydroxyl | | Prep. Ex. 16 PFA film having hydroxyl | | Prep. Ex. 14 PFA film having no hydroxyl | |
| Measuring items / Chemicals | Change in appearance | Weight change ratio (%) | Change in appearance | Weight change ratio (%) | Change in appearance | Weight change ratio (%) |
| Sulfuric acid (95 %) | ○ | 0.03 | ○ | 0.04 | ○ | 0.00 |
| Hydrochloric acid (35 %) | ○ | 0.00 | ○ | -0.06 | ○ | -0.02 |
| Sodium hydroxide (50 %) | ○ | -0.93 | ○ | -0.10 | ○ | -0.11 |
| Aqueous ammonia (28 %) | ○ | -0.03 | ○ | 0.06 | ○ | -0.02 |
| Methanol | ○ | 0.40 | ○ | 0.02 | ○ | -0.02 |
| Acetone | ○ | 0.82 | ○ | 1.95 | ○ | 0.05 |
| Chloroform | ○ | 1.42 | ○ | 1.33 | ○ | 1.13 |
| Toluene | ○ | 0.33 | ○ | 0.36 | ○ | 0.24 |
| Benzene | ○ | 0.42 | ○ | 0.49 | ○ | 0.37 |
| Methyl ethyl ketone | ○ | 0.83 | ○ | 0.58 | ○ | 0.13 |
| Ethyl acetate | ○ | 0.86 | ○ | 0.71 | ○ | 0.27 |
| Phenol | ○ | -0.02 | ○ | -0.02 | ○ | -0.08 |

TABLE 5

| | Ex. 18 | | Ex. 19 | | Com. Ex. 13 | |
|---|---|---|---|---|---|---|
| Kind of fluorine-containing polymer | Prep. Ex. 13 PFA film having hydroxyl | | Prep. Ex. 16 PFA film having hydroxyl | | Prep. Ex. 14 PFA film having no hydroxyl | |
| Measuring items / Chemicals | Strength ($kgf/cm^2$) (Retention ratio (%)) | Elongation (%) (Retention ratio (%)) | Strength ($kgf/cm^2$) (Retention ratio (%)) | Elongation (%) (Retention ratio (%)) | Strength ($kgf/cm^2$) (Retention ratio (%)) | Elongation (%) (Retention ratio (%)) |
| Before test | 336 | 299 | 306 | 310 | 295 | 354 |
| Sulfuric acid (95 %) | 251(75) | 188(63) | 176(58) | 97(31) | 151(51) | 61(17) |
| Hydrochloric acid (35 %) | 353(105) | 284(95) | 284(93) | 288(93) | 286(97) | 357(101) |
| Sodium hydroxide (50 %) | 309(92) | 253(85) | 230(75) | 208(67) | 169(57) | 169(48) |
| Aqueous ammonia (28 %) | 250(74) | 216(72) | 179(58) | 142(46) | 172(58) | 168(47) |
| Methanol | 335(100) | 306(102) | 306(100) | 319(103) | 301(102) | 369(104) |
| Acetone | 291(87) | 318(106) | 323(106) | 324(105) | 281(95) | 352(99) |
| Chloroform | 291(87) | 274(92) | 278(91) | 306(99) | 272(92) | 382(108) |
| Toluene | 333(99) | 296(99) | 306(100) | 341(110) | 292(99) | 359(101) |
| Benzene | 336(100) | 292(98) | 275(90) | 295(95) | 281(95) | 362(102) |
| Methyl ethyl ketone | 294(88) | 301(101) | 277(91) | 287(93) | 280(95) | 343(97) |
| Ethyl acetate | 344(102) | 287(96) | 302(99) | 323(104) | 280(95) | 339(96) |
| Phenol | 320(95) | 276(92) | 315(103) | 292(94) | 286(97) | 347(98) |

TABLE 6

| Kind of fluorine-containing polymer | Example 18<br>Preparation Example 13<br>PFA film having hydroxyl |
|---|---|
| Chemicals \ Measuring items | Strength of adhesion to aluminum (kgf/25 mm) |
| Before test | 6.1 |
| Sulfuric acid (95 %) | 4.6 |
| Hydrochloric acid (35 %) | 4.6 |
| Sodium hydroxide (50 %) | 6.9 |
| Aqueous ammonia (28 %) | 5.2 |
| Methanol | 4.3 |
| Acetone | 6.1 |
| Chloroform | 5.4 |
| Toluene | 5.2 |
| Benzene | 5.2 |
| Methyl ethyl ketone | 4.4 |
| Ethyl acetate | 5.8 |
| Phenol | 6.5 |

EXAMPLE 20

(Hydrochloric acid permeation test of PFA film having hydroxyl)

As shown in Fig. 15, two cylindrical vessels 20 and 21 having an opening of 10 $cm^2$ sectional area were put together, and the 0.5 mm thick PFA film having hydroxyl of Preparation Example 11 was placed between the two openings facing each other. One partitioned space (vessel 20 of supply side) was filled with 35 % concentrated hydrochloric acid, and another partitioned space (vessel 21 to which permeation occurs) was filled with ion exchange water. The liquid temperature in the vessels 20 and 21 was maintained at 70°C and 20°C, respectively.

The liquid in the vessel 21 was sampled every 24 hours from starting of the test for about 20 days, and an amount of hydrochloric acid permeated through the test film were measured by ion chromatography. Time (t) and permeating amount (Q) were plotted on an abscissa and ordinate, respectively, and a diffusion coefficient and permeation coefficient were calculated by the following method. The results are shown in Table 7.

(Calculation of diffusion coefficient and permeation coefficient)

By plotting time (t) on the abscissa and permeating amount (Q) on the ordinate, a permeation curve as shown in Fig. 16 is obtained.

Namely, as time elapses, the permeation amount Q increases naturally. However when a certain period of time elapses, a permeation amount per unit time becomes constant (stationary state), and the permeation curve becomes straight (inclination: $\Delta$). When an extrapolation line is drawn along the straight line of the inclination $\Delta$, the line crosses the abscissa, and a delay time ($\theta$) can be obtained.

The diffusion coefficient can be obtained from the delay time $\theta$ by the following equation.

$$D = l^2 / 6\theta \quad (1)$$

(l: Thickness of test film)

Further the permeation amount Q is shown by the following equation provided that a solubility coefficient is S.

$$Q = \frac{DS(C_1 - C_2)}{l} \cdot A \cdot t \quad (2)$$

in which

$C_1$: Initial concentration of hydrochloric acid in vessel 20
$C_2$: Initial concentration of hydrochloric acid in vessel 21
A: Sectional area of filtration surface
t: Time

On the other hand, there are the following equations.

$$P = D \cdot S \quad (3)$$

$$Q/t = \tan\Delta \quad (4)$$

From the above-mentioned equations, the permeation coefficient P is obtained by the following equation.

$$P = \frac{l}{A(C_1 - C_2)} \cdot \tan\Delta \quad (5)$$

Namely, the permeation coefficient (P) can be obtained from the equation (5) by plotting the relation between the permeation amount and the time and from the graph, determining an increased amount ($\tan\Delta$) of hydrochloric acid per unit time at stationary state.

EXAMPLES 21 to 22

(Hydrochloric acid permeation test of PFA film having hydroxyl)

The hydrochloric acid permeation test was carried out in the same manner as in Example 20 except that the PFA films having hydroxyl which were obtained in Preparation Example 10 (Example 21) and Preparation Example 17 (Example 22) were used instead of the PFA film produced in Preparation Example 11. Diffusion coefficient and permeation coefficient were calculated. The results are shown in Table 7.

COMPARATIVE EXAMPLE 14

(Hydrochloric acid permeation test of PFA film having no hydroxyl)

The hydrochloric acid permeation test was carried out in the same manner as in Example 20 except that the PFA film having no hydroxyl which was obtained in Preparation Example 12 was used instead of the PFA film produced in Preparation Example 11. Diffusion coefficient and permeation coefficient were calculated. The results are shown in Table 7.

TABLE 7

| | Ex. 20 | Ex. 21 | Ex. 22 | Com. Ex. 14 |
|---|---|---|---|---|
| Kind of fluorine-containing polymer | Prep. Ex. 11<br>PFA film having hydroxyl | Prep. Ex. 10<br>PFA film having hydroxyl | Prep. Ex. 17<br>PFA film having hydroxyl | Prep. Ex. 12<br>PFA film having no hydroxyl |
| Diffusion coefficient ($cm^2/sec$) | $6.1 \times 10^{8}$ | $6.6 \times 10^{8}$ | $3.8 \times 10^{8}$ | $9.0 \times 10^{8}$ |
| Permeation coefficient ($g \cdot cm/sec \cdot cm^2$) | $5.4 \times 10^{13}$ | $4.5 \times 10^{13}$ | $2.8 \times 10^{13}$ | $7.0 \times 10^{13}$ |

INDUSTRIAL APPLICABILITY

According to the present invention, it is possible to obtain a composite material having chemical resistance which is produced by applying, to a substrate, a material comprising a fluorine-containing polymer having excellent adhesive property, without necessitating complicated steps. Further according to the present invention, it is possible to obtain a composite material which is excellent in heat resistance, stain-proofing property, water- and oil-repelling property, stain removing property, non-sticking property, rust-preventive property, antibacterial property, resistance to energy ray and friction resistance and is useful as a material for various vessels, piping materials, and manufacturing equipment for chemical industry, semi-conductor and foods.

**Claims**

1. A composite material having chemical resistance and produced by applying, to a substrate, a material comprising a fluorine-containing ethylenic polymer having functional group which is prepared by copolymerizing;

    (a) 0.05 to 30 % by mole of at least one of fluorine-containing ethylenic monomers having at least one functional group selected from the group consisting of hydroxyl, carboxyl, a carboxylic salt group, a carboxylic ester group and epoxy, and
    (b) 70 to 99.95 % by mole of at least one of fluorine-containing ethylenic monomers having no functional group mentioned above.

2. The composite material having chemical resistance of Claim 1, which is produced by applying, to the substrate, the fluorine-containing ethylenic polymer having functional group, wherein said fluorine-containing ethylenic monomer (a) having functional group is at least one of fluorine-containing ethylenic monomers having functional group which are represented by the formula (1):

$$CX_2=CX^1-R_f-Y \qquad (1)$$

    wherein Y is $-CH_2OH$, -COOH, a carboxylic salt group, a carboxylic ester group or epoxy, X and $X^1$ are the same or different and each is hydrogen atom or fluorine atom, $R_f$ is a divalent fluorine-containing alkylene group having 1 to 40 carbon atoms, a fluorine-containing oxyalkylene group having 1 to 40 carbon atoms, a fluorine-containing alkylene group having ether bond and 1 to 40 carbon atoms or a fluorine-containing oxyalkylene group having ether bond and 1 to 40 carbon atoms.

3. The composite material having chemical resistance of Claim 1 or 2, which is produced by applying, to the substrate, the fluorine-containing ethylenic polymer having functional group, wherein the fluorine-containing ethylenic monomer (b) which does not have said functional group is tetrafluoroethylene.

4. The composite material having chemical resistance of Claim 1 or 2, which is produced by applying, to the substrate, the fluorine-containing ethylenic polymer having functional group, wherein the fluorine-containing ethylenic monomer (b) which does not have said functional group is a monomer mixture of 85 to 99.7 % by mole of tetrafluoroethylene and 0.3 to 15 % by mole of a monomer represented by the formula (2):

$$CF_2=CF-R_f^1 \qquad (2)$$

    wherein $R_f^1$ is $CF_3$ or $OR_f^2$, in which $R_f^2$ is a perfluoroalkyl group having 1 to 5 carbon atoms.

5. The composite material having chemical resistance of Claim 1 or 2, wherein the fluorine-containing ethylenic monomer (b) which does not have said functional group is a monomer mixture of 40 to 80 % by mole of tetrafluoroethylene, 20 to 60 % by mole of ethylene and 0 to 15 % by mole of a monomer copolymerizable therewith.

6. The composite material having chemical resistance of any of Claims 1 to 5, in which the fluorine-containing ethylenic polymer having functional group is applied to the substrate in the form of a coating composition.

7. The composite material having chemical resistance of any of Claims 1 to 5, in which the fluorine-containing ethylenic polymer having functional group is applied to the substrate in the form of an aqueous dispersion.

8. The composite material having chemical resistance of any of Claims 1 to 5, in which the fluorine-containing ethylenic polymer having functional group is applied to the substrate in the form of a powder coating composition.

**9.** The composite material having chemical resistance of any of Claims 1 to 5, in which the fluorine-containing ethylenic polymer having functional group is applied to the substrate in the form of a film.

**10.** The composite material having chemical resistance of any of Claims 1 to 5, wherein said substrate is a metallic substrate.

**11.** The composite material having chemical resistance of any of Claims 1 to 5, wherein said substrate is a glass substrate.

**12.** The composite material having chemical resistance of any of Claims 1 to 5, wherein said substrate is a synthetic resin substrate.

**13.** Use of the composite material having chemical resistance of any of Claims 1 to 12 as a material used for vessels for storing chemicals.

**14.** Use of the composite material having chemical resistance of any of Claims 1 to 12 as a material used for piping materials for transporting chemicals.

FIG. 1

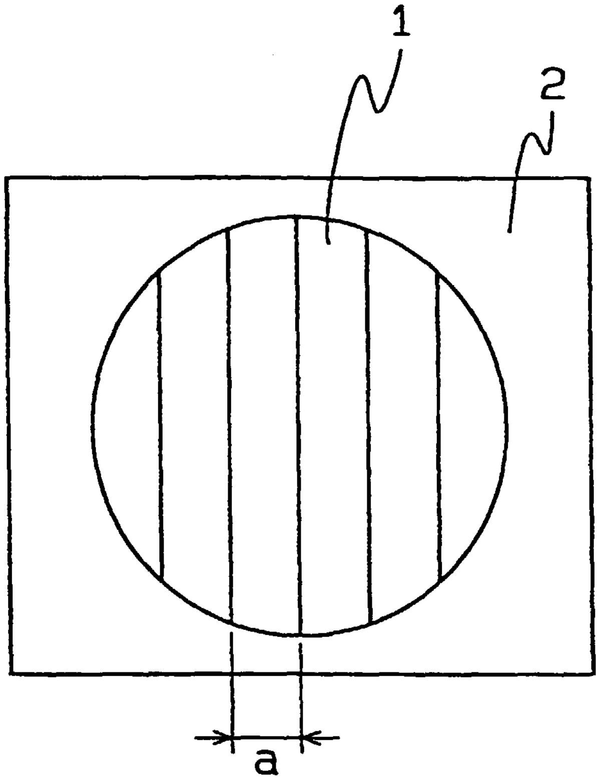


FIG. 2

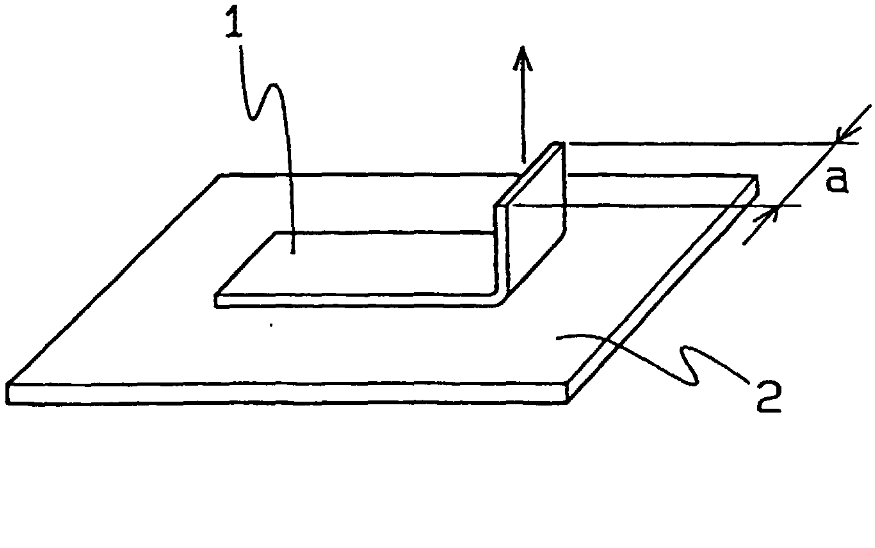

FIG. 3

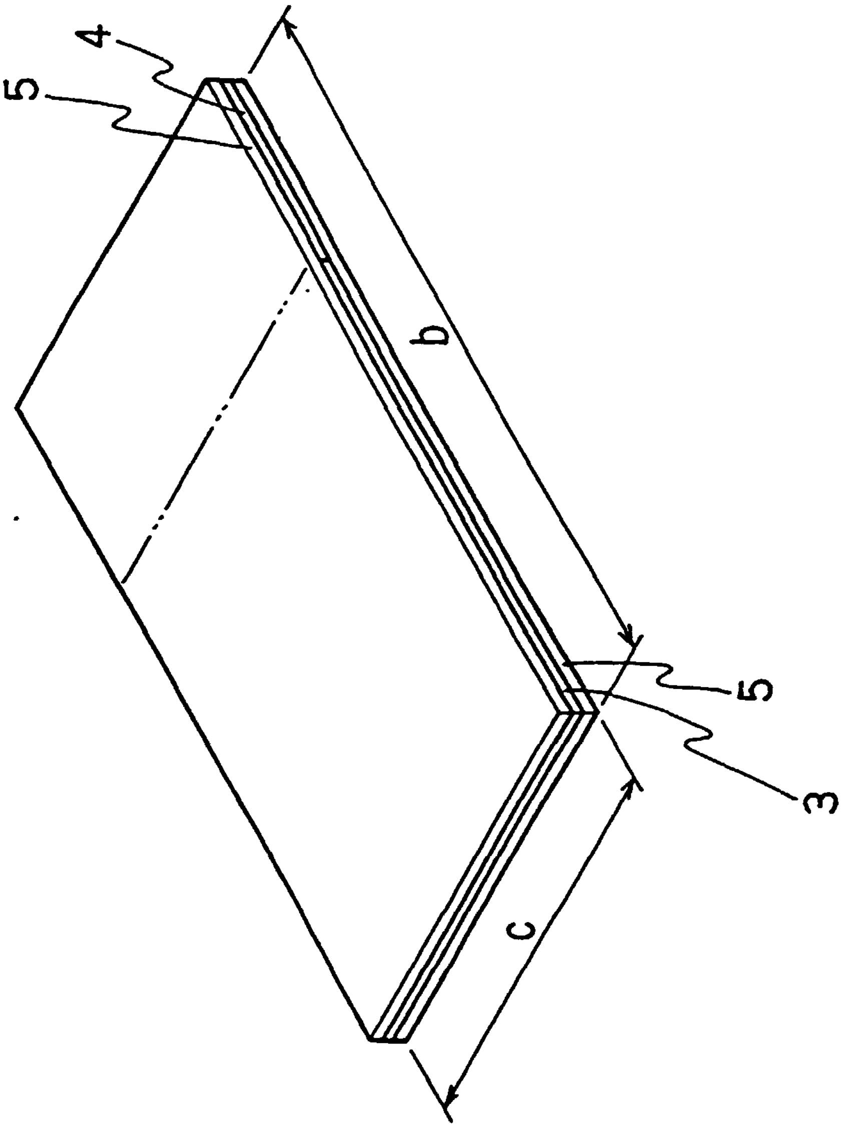

FIG. 4

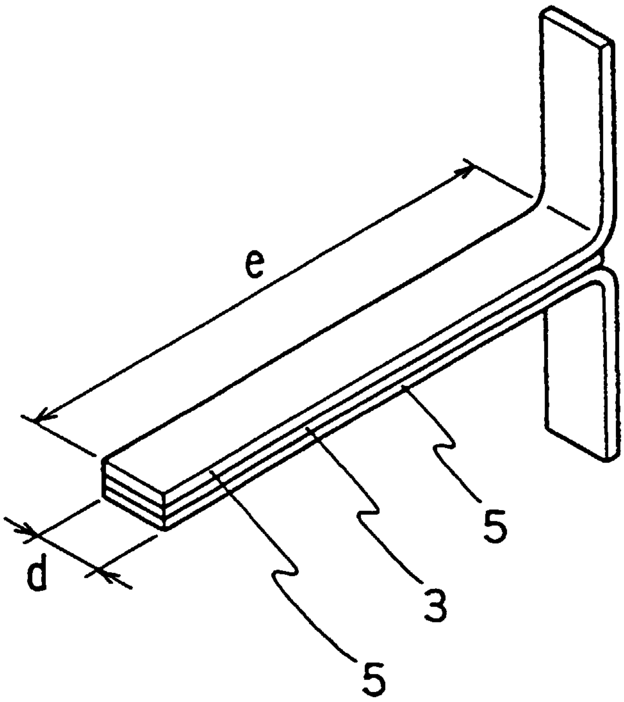

FIG. 5

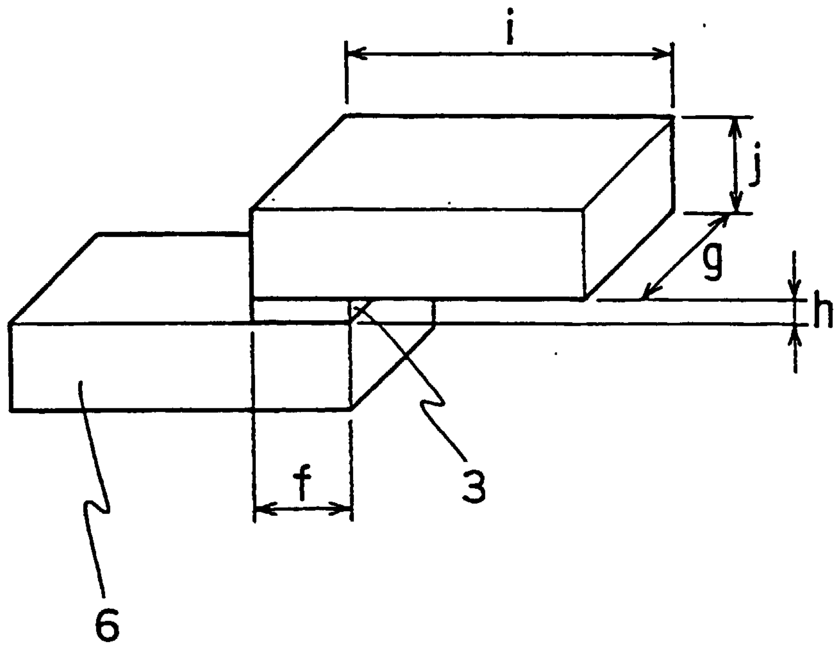

FIG. 6

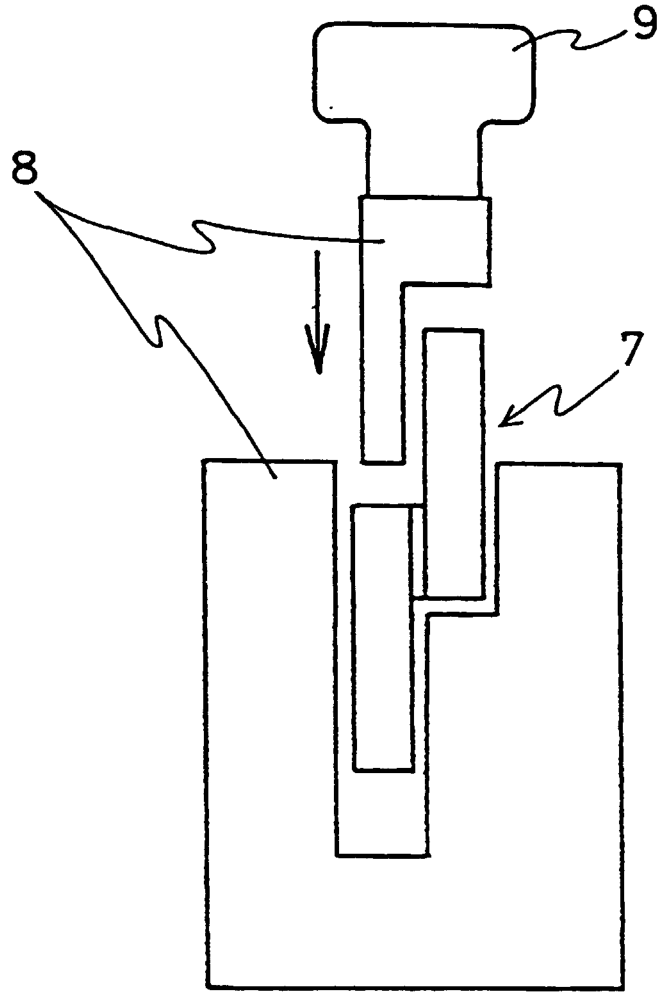

FIG. 7

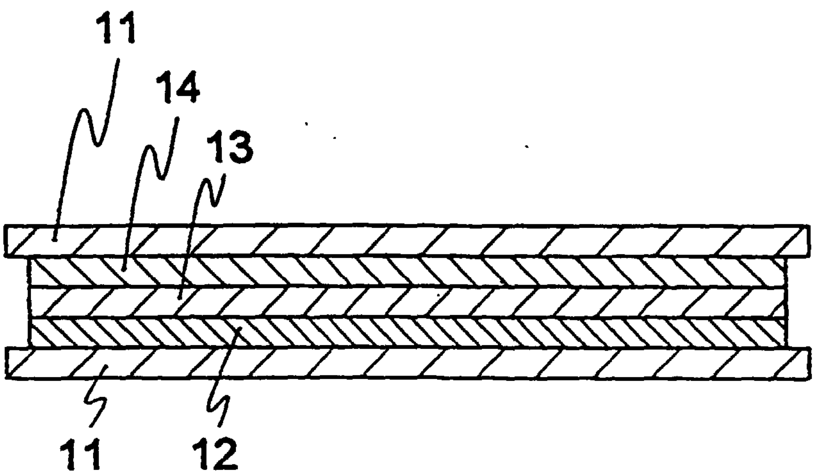


FIG. 8

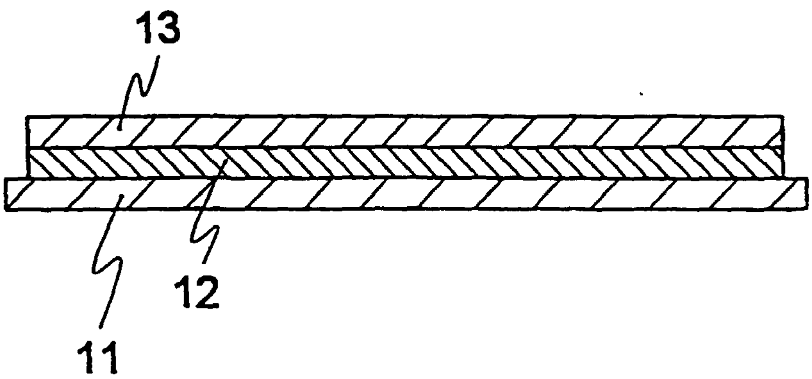

FIG. 9

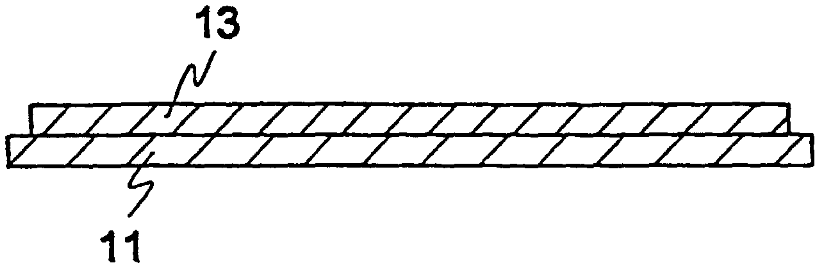


FIG.10

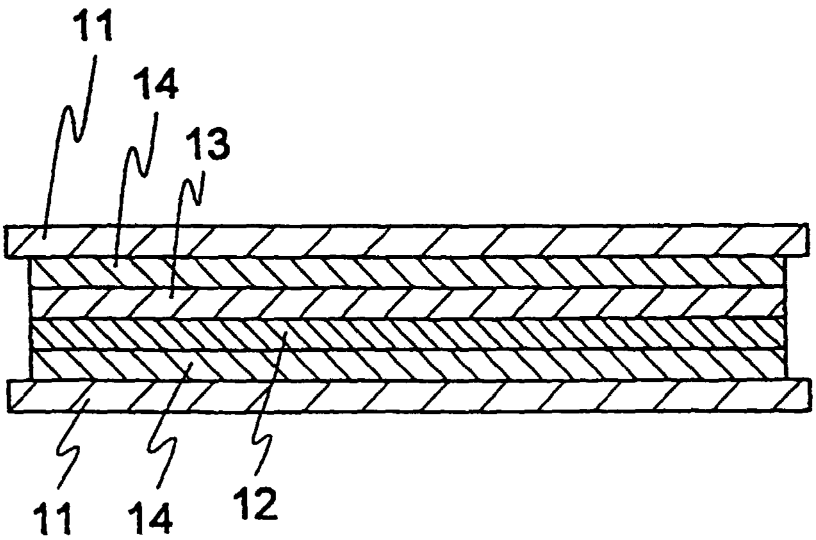

FIG. 11

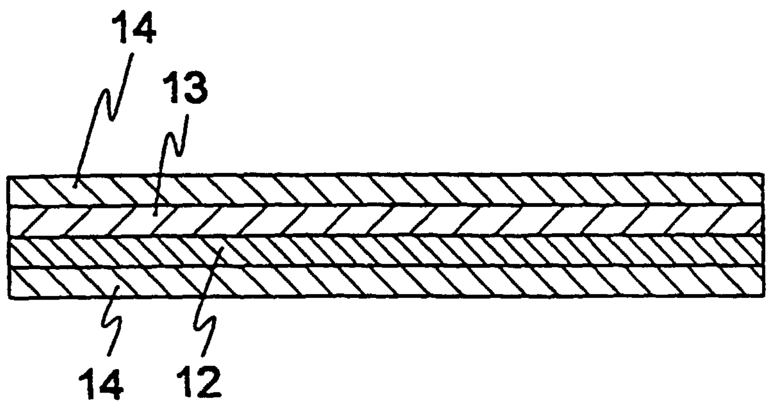

FIG. 12

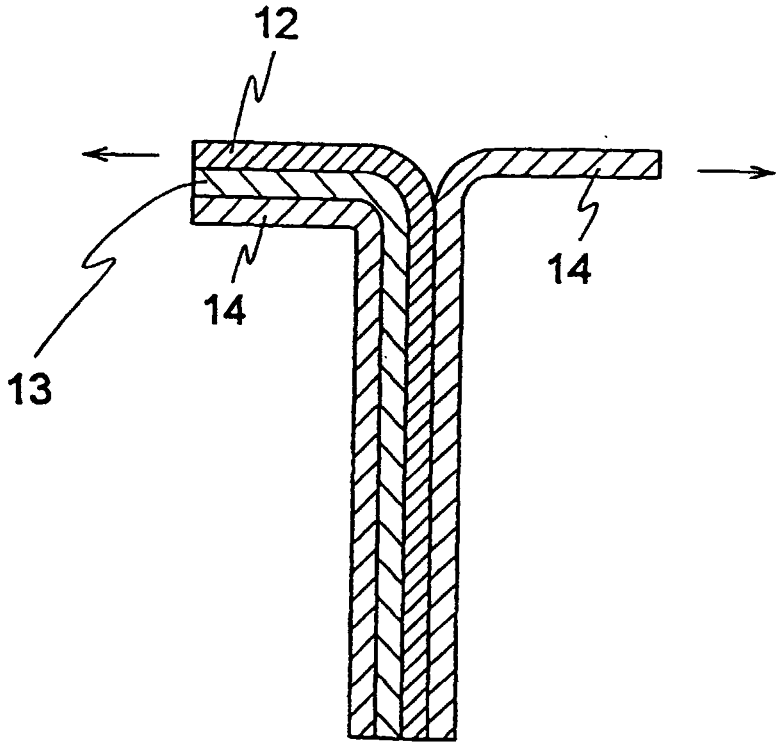


FIG. 13

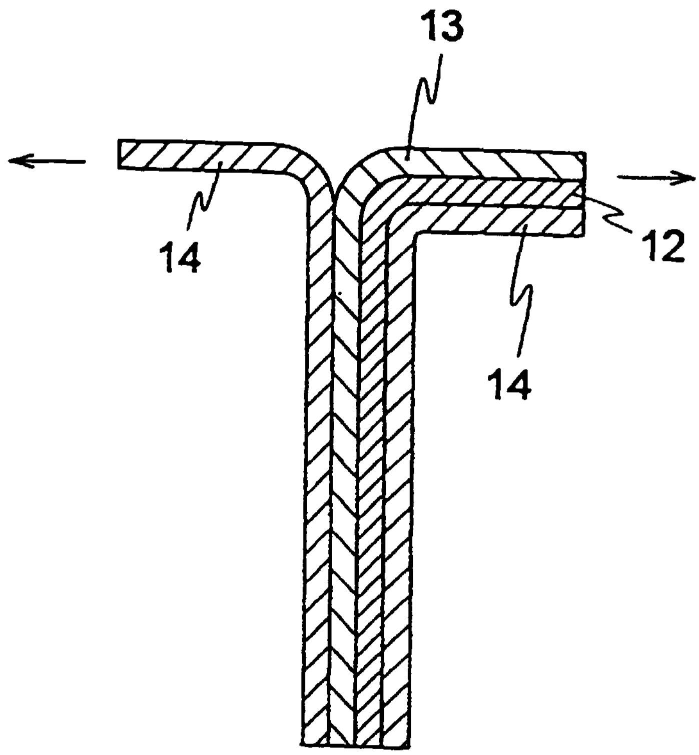

FIG. 14

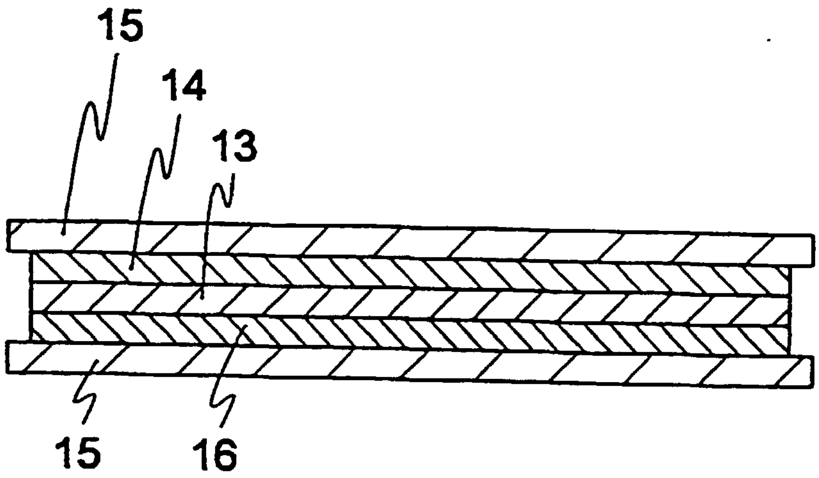

FIG. 15

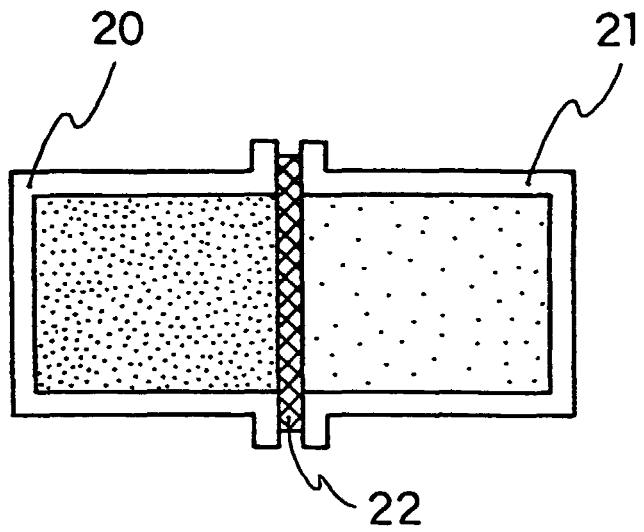
20
21
22

FIG. 16

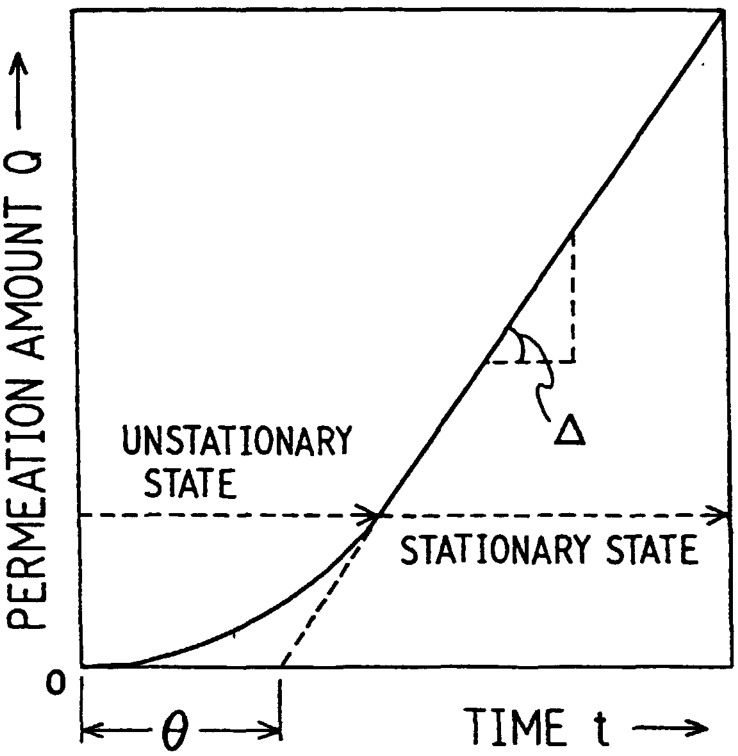
PERMEATION AMOUNT Q
UNSTATIONARY STATE
STATIONARY STATE
Δ
0
θ
TIME t

**INTERNATIONAL SEARCH REPORT**

International application No.
PCT/JP98/01703

**A. CLASSIFICATION OF SUBJECT MATTER**
Int.Cl[6] B32B27/30, B05D7/24, C09D127/12, C08F214/18

According to International Patent Classification (IPC) or to both national classification and IPC

**B. FIELDS SEARCHED**

Minimum documentation searched (classification system followed by classification symbols)
Int.Cl[6] B32B27/30, B05D7/24, C09D127/12, C08F214/18

Documentation searched other than minimum documentation to the extent that such documents are included in the fields searched

| | | | |
|---|---|---|---|
| Jitsuyo Shinan Koho | 1926-1996 | Jitsuyo Shinan Toroku Koho | 1996-1998 |
| Kokai Jitsuyo Shinan Koho | 1971-1998 | Toroku Jitsuyo Shinan Koho | 1994-1998 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| PX | JP, 9-157578, A (Daikin Industries, Ltd.), June 17, 1997 (17. 06. 97) & WO, 9721776, A | 1-14 |
| PX | JP, 9-157616, A (Daikin Industries, Ltd.), June 17, 1997 (17. 06. 97) & WO, 9721779, A | 1-14 |
| X | JP, 5-194668, A (Japan Synthetic Rubber Co., Ltd.), August 3, 1993 (03. 08. 93) (Family: none) | 1, 3-12 |
| Y | | 13, 14 |
| X | JP, 5-1118, A (Asahi Chemical Industry Co., Ltd.), January 8, 1993 (08. 01. 93) (Family: none) | 1, 3-12 |
| Y | | 13, 14 |
| X | JP, 6-263951, A (Asahi Glass Co., Ltd.), September 20, 1994 (20. 09. 94) (Family: none) | 1-12 |
| Y | | 13, 14 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>July 1, 1998 (01. 07. 98) | Date of mailing of the international search report<br>July 14, 1998 (14. 07. 98) |
| Name and mailing address of the ISA/<br>Japanese Patent Office | Authorized officer |
| Facsimile No. | Telephone No. |

Form PCT/ISA/210 (second sheet) (July 1992)

## INTERNATIONAL SEARCH REPORT

International application No.
PCT/JP98/01703

C (Continuation). DOCUMENTS CONSIDERED TO BE RELEVANT

| Category* | Citation of document, with indication, where appropriate, of the relevant passages | Relevant to claim No. |
|---|---|---|
| X | JP, 4-33904, A (Asahi Glass Co., Ltd.), February 5, 1992 (05. 02. 92) (Family: none) | 1-5 |
| Y | JP, 62-187739, A (Mitsui Petrochemical Industries, Ltd.), August 17, 1987 (17. 08. 87) (Family: none) | 13, 14 |
| X | JP, 1-185376, A (Central Glass Co., Ltd.), July 24, 1989 (24. 07. 89) (Family: none) | 1 |

Form PCT/ISA/210 (continuation of second sheet) (July 1992)